(19) Europäisches Patentamt / European Patent Office / Office européen des brevets

(11) **EP 4 346 237 B1**

(12) **EUROPEAN PATENT SPECIFICATION**

(45) Date of publication and mention of the grant of the patent:
**05.11.2025 Bulletin 2025/45**

(21) Application number: **22828769.4**

(22) Date of filing: **22.06.2022**

(51) International Patent Classification (IPC):
*H04W 4/02* (2018.01)　*H04W 4/80* (2018.01)
*G01S 13/76* (2006.01)　*G01S 13/02* (2006.01)
*G01S 5/00* (2006.01)　*G01S 5/02* (2010.01)
*H04W 4/60* (2018.01)

(52) Cooperative Patent Classification (CPC):
**H04W 4/80; G01S 5/02;** G01S 13/765;
G01S 2201/02; H04W 4/02; H04W 4/60;
Y02D 30/70

(86) International application number:
**PCT/KR2022/008898**

(87) International publication number:
**WO 2022/270922 (29.12.2022 Gazette 2022/52)**

(54) **METHOD AND DEVICE FOR PROVIDING ULTRA-WIDEBAND COMMUNICATION-BASED SERVICE**

VERFAHREN UND VORRICHTUNG ZUR BEREITSTELLUNG EINES ULTRABREITBANDKOMMUNIKATIONSBASIERTEN DIENSTES

PROCÉDÉ ET DISPOSITIF DE FOURNITURE D'UN SERVICE BASÉ SUR UNE COMMUNICATION À BANDE ULTRA-LARGE (UWB)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2021　KR 20210080847**

(43) Date of publication of application:
**03.04.2024 Bulletin 2024/14**

(73) Proprietor: **Samsung Electronics Co., Ltd.**
**Suwon-si, Gyeonggi-do 16677 (KR)**

(72) Inventors:
 • **KEUM, Jieun**
 **Suwon-si, Gyeonggi-do 16677 (KR)**
 • **KOO, Jonghoe**
 **Suwon-si, Gyeonggi-do 16677 (KR)**

(74) Representative: **Nederlandsch Octrooibureau**
**P.O. Box 29720**
**2502 LS The Hague (NL)**

(56) References cited:
WO-A1-2021/023377　KR-A- 20180 042 546
KR-A- 20200 054 006　KR-A- 20210 031 153
US-A1- 2018 356 492　US-A1- 2020 106 877
US-A1- 2021 136 556

## Description

[Technical Field]

The disclosure relates to UWB communication, and more particularly, to a method and apparatus for providing a UWB service.

[Background Art]

The Internet has evolved from a human-centered connection network where humans create and consume information to an Internet of things (IoT) network where information is exchanged and processed among distributed components such as objects. Internet of everything (IoE) technology, which combines IoT technology with big data processing technology through connections to cloud servers, is also emerging. To realize IoT, technology elements such as sensing technology, wired and wireless communication and network infrastructure, service interface technology, and security technology are required. Recently, technologies such as sensor network, machine to machine (M2M) communication, and machine type communication (MTC) have been studied to connect objects.

In the IoT environment, intelligent Internet technology (IT) services may be provided, which create new values for human life by collecting and analyzing data generated from connected objects. IoT may find its applications in such fields as smart homes, smart buildings, smart cities, smart or connected cars, smart grids, healthcare, smart appliances, and advanced medical services through the convergence and combination of existing information technology (IT) and various industries.

With the advancement of wireless communication systems, various services may be provided, and methods of providing these services effectively are required. For example, ranging techniques may be used to measure the distance between electronic devices using ultra wide band (UWB).

Prior art document WO2021/023377 A1 discloses a solution where UWB tags are configured to either perform tag-to-tag ranging or tag-to-anchor ranging with uplink TDOA.

[Detailed Description of the Invention]

[Technical Problem]

The disclosure provides a method for a UWB-based location service.

In order to provide a UWB-based location service, the disclosure provides a method of transmitting assistant data for obtaining a UWB message used for localization through an OOB device. The disclosure also provides a method of transmitting part of information used for localization through a UWB message.

The disclosure provides a method of installing an application and registering and activating a profile for the application in order to provide a UWB-based location service.

[Technical Solution]

A method of an electronic device according to claim 1.

An electronic device according to claim 10.

[Advantageous Effects]

The disclosure enables the provision of an efficient UWB-based location service. In addition, an accurate and fast indoor navigation service may be provided.

[Brief Description of Drawings]

FIG. 1A illustrates an exemplary architecture of a UWB device.
FIG. 1B illustrates an exemplary configuration of a framework of a UWB device.
FIG. 2 illustrates an exemplary configuration of a communication system including a UWB device.
FIG. 3 illustrates an exemplary structure of a frame used for UWB communication.
FIG. 4 illustrates an exemplary method of performing UWB communication between two UWB devices.
FIGS. 5A and 5B illustrate an exemplary method of performing UWB ranging by a UWB device.

FIG. 5C illustrates another exemplary method of performing UWB ranging by a UWB device.

FIG. 6 illustrates exemplary structures of a ranging block and a round used for UWB ranging.

FIG. 7 illustrates an exemplary system architecture for providing a UWB-based service according to an embodiment of the disclosure.

FIG. 8 illustrates an exemplary operation scenario for providing an indoor positioning system (IPS) service according to an embodiment of the disclosure.

FIG. 9 illustrates an exemplary configuration of an IPS service providing system according to an embodiment of the disclosure.

FIG. 10 illustrates operations of an installation step in an IPS service providing system according to an embodiment of the disclosure.

FIGS. 11A, 11B, 11C, and 11D illustrate parameters included in a request and response for registering a profile for an IPS service according to an embodiment of the disclosure.

FIG. 12 illustrates operations of an entry step in an IPS service providing system according to an embodiment of the disclosure.

FIG. 13 illustrates parameters included in a request and response for activating a profile for an IPS service according to an embodiment of the disclosure.

FIG. 14 illustrates operations of an assistant data acquisition step in an IPS service providing system according to an embodiment of the disclosure.

FIGS. 15A, 15B, and 15C illustrate a BLE Advertisement message including assistant data according to an embodiment of the disclosure.

FIG. 16 illustrates operations of an assistant data acquisition step in an IPS service providing system according to another embodiment of the disclosure.

FIG. 17 illustrates operations of a localization step in an IPS service providing system according to another embodiment of the disclosure.

FIG. 18 illustrates a method of performing UWB ranging based on a UWB configuration by a UE according to an embodiment of the disclosure.

FIG. 19 illustrates operations of a service use step in an IPS service providing system according to an embodiment of the disclosure.

FIG. 20 illustrates parameters included in a notification for transmitting result data of an IPS service according to an embodiment of the disclosure.

FIG. 21 is a diagram illustrating a signal flow for an operation procedure in an IPS service providing system according to an embodiment of the disclosure.

FIG. 22 is a flowchart illustrating a method of an electronic device according to an embodiment of the disclosure.

FIG. 23 illustrates a structure of an electronic device according to an embodiment of the disclosure.

FIG. 24 illustrates a structure of an OOB anchor device according to an embodiment of the disclosure.

FIG. 25 illustrates a structure of a UWB anchor device according to an embodiment of the disclosure.

[Mode for Carrying out the Invention]

An embodiment of the disclosure will be described in detail with reference to the attached drawings.

A description of a technology which is well known in the technical field of the disclosure and is not directly related to the disclosure will be avoided lest it should obscure the subject matter of the disclosure. This is intended to clarify the subject matter of the disclosure without obscuring it by omitting an unnecessary description.

For the same reason, some components are exaggerated, omitted, or schematically illustrated in the attached drawings. Further, the drawn size of each component does not exactly reflect its real size. In each drawing, the same reference numerals are assigned to the same or corresponding components.

The advantages and features of the disclosure and a method of achieving them will become apparent from reference to embodiments described below in detail in conjunction with the attached drawings. However, the disclosure may be implemented in various manners, not limited to the embodiments set forth herein. Rather, these embodiments are provided such that the disclosure is complete and thorough and its scope is fully conveyed to those skilled in the art, and the disclosure is only defined by the appended claims. Throughout the specification, the same reference numerals denote the same components.

It will be understood that each block of the flowchart illustrations and combinations of the flowchart illustrations may be implemented by computer program instructions. These computer program instructions may be loaded on a processor of a general purpose computer, special purpose computer, or other programmable data processing equipment, such that the instructions, which are executed through the processor of the computer or other programmable data processing equipment, create means for implementing the functions specified in the flowchart block(s). These computer program instructions may also be stored in a computer-usable or computer-readable memory that may direct the computer or other programmable data processing equipment to function in a particular manner, such that the instructions stored in the computer-usable or computer-readable memory produce an article of manufacture including instruction means which implement the function specified in the flowchart block(s). The computer program instructions may also be loaded onto the computer or other programmable data processing equipment to cause a series of operations to be performed on the computer or other programmable data processing equipment to produce a computer implemented process such that the instructions which are executed on the computer or other programmable equipment provide operations for implementing the functions specified in the flowchart block(s).

Furthermore, each block may represent part of a module, a segment, or code including one or more executable instructions for performing specific logic function(s). Moreover, it should be noted that the functions of the blocks may be performed in a different order in several alternative modified implementations. For example, two successive blocks may be performed substantially at the same time, or may be performed in reverse order according to their functions.

The term 'unit or part' as used herein means, but is not limited to, a software or hardware component, such as a field programmable gate array (FPGA) or application specific integrated circuit (ASIC). A 'unit or part' may be configured to play certain roles. However, a 'unit or part' is not limited to software or hardware. A 'unit or part' may be configured to reside on an addressable storage medium and configured to be executed on one or more processors. Thus, a 'unit or part' includes components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and 'units' may be combined into fewer components and 'units' or further separated into additional components and 'units'. In addition, the components and 'units' may be implemented such that they are executed on one or more central processing units (CPUs) in a device or a secure multimedia card. Further, a 'unit or part' may include one or more processors.

As used herein, the term 'terminal' or 'device' may be referred to as a mobile station (MS), user equipment (UE), user terminal (UT), user device (UD), wireless terminal, access terminal (AT), terminal, subscriber unit (SU), subscriber station (SS), wireless device, wireless communication device, wireless transmit/receive unit (WTRU), mobile node, mobile, or other terms. Various embodiments of a terminal may include a cellular telephone, a smartphone with a wireless communication function, a personal digital assistant (PDA) with a wireless communication function, a wireless modem, a portable computer with a wireless communication function, an imaging device such as a digital camera with a wireless communication function, a gaming device with a wireless communication function, a music storage and playback appliance with a wireless communication function, an Internet appliance with wireless Internet access and browsing capabilities, and a portable unit or terminal incorporating combinations of such functions. Further, the terminal may include, but are not limited to, a machine to machine (M2M) terminal and a machine type communication (MTC) terminal/device. In this specification, the terminal may also be referred to as an electronic device or simply a device.

The operational principle of the disclosure will now be described in detail with reference to the accompanying drawings. In describing the disclosure below, a detailed description of relevant known functions or configurations will be omitted lest it should obscure the subject matter of the disclosure. The following terms are defined in light of the functions of this disclosure, and may vary depending on the intent of a user or an operator or customs. Accordingly, the definitions should be made in the context of the disclosure as a whole.

Embodiments of the disclosure will now be described in detail with reference to the accompanying drawings. While embodiments of the disclosure are described herein in the context of a communication system using ultra wide band (UWB) as an example, they are applicable to other communication systems having similar technical backgrounds or characteristics. For example, the communication systems may include a communication system using Bluetooth or ZigBee. Accordingly, the embodiments of the disclosure may be applied to other communication systems with some modifications without substantially departing from the scope of the disclosure as determined by those skilled in the art.

Further, in describing the disclosure below, a detailed description of relevant known functions or configurations will be omitted lest it should obscure the subject matter of the disclosure. The following terms are defined in light of the functions of this disclosure, and may vary depending on the intent of a user or an operator or customs. Accordingly, the definitions should be made in the context of the disclosure as a whole.

In general, wireless sensor network technologies are largely categorized into wireless local area network (WLAN) technology and wireless personal area network (WPAN) technology based on their recognition ranges. WLAN is a technology based on IEEE 802.11 which may connect to a backbone network within a radius of about 100 meters. WPAN is a technology based on IEEE 802.15, such as Bluetooth, ZigBee, and UWB. A wireless network in which these wireless network technologies are implemented may include a plurality of electronic devices.

UWB may refer to a short-range, high-speed wireless communication technology that uses a wide frequency band of several GHz or more, a low spectral density, and a short pulse width (1 to 4 nsec) in a baseband state. UWB may also refer to a band itself to which UWB communication is applied. UWB enables secure and accurate ranging between devices. In doing so, UWB enables relative position estimation based on the distance between two devices or precise position estimation of a device based on distances from fixed devices (whose positions are known).

Specific terms used in the following description are provided to aid in the understanding of the disclosure, and may be modified to other forms without departing from the technical ideas of the disclosure.

An "application dedicated file (ADF)" may be, for example, a data structure within an application data structure which may host an application or application specific data.

An "application protocol data unit (APDU)" may be a command and response used to communicate with an application data structure within a UWB device.

"Application specific data" may be, for example, a file structure having a root level and an application level containing both UWB controlee information and UWB session data required for a UWB session.

A "controller" may be a ranging device that defines and controls ranging control messages (RCMs) (or control messages). The controller may define and control ranging features by transmitting a control message.

A "controlee" may be a ranging device that uses ranging parameters in an RCM (or a control message) received from a controller. The controlee may use the same ranging features as configured by a control message from the controller.

A "dynamic scrambled timestamp sequence (STS) mode" may be an operation mode in which an STS is not repeated during a ranging session, unlike a "static STS". In this mode, an STS is managed by a ranging device, and a ranging session key that generates the STS may be managed by a secure component.

An "applet" may be, for example, an applet executed on a secure component, which includes UWB parameters and service data. In the disclosure, the applet may be a FiRa applet.

"DL-TDoA" may be referred to as downlink time difference of arrival (DL-TDoA) or reverse TDoA. Its basic operation may be that a UE (a user device) (a tag device) overhears (receives) a message from an anchor device during broadcasting or exchange of messages between a plurality of anchor devices. DL-TDoA may also be categorized as a type of one-way ranging, like uplink TDoA. A UE operating in DL-TDoA may overhear messages transmitted by two anchor devices and calculate a TDoA proportional to the difference of the distances between the anchor devices and the UE. The UE may calculate relative distances to multiple pairs of anchor devices, using the TDoA of the anchor devices, and use the relative distances in positioning. The behavior of an anchor device for DL-TDoA may be similar to that of double side-two way ranging (DS-TWR) in IEEE 802.15.4z, and further include other useful time information to allow a UE to calculate a TDoA.

An anchor device may be referred to as a UWB anchor, and may be a UWB terminal installed by a service provider on a wall, ceiling, structure, or the like in a room to provide an indoor positioning service. Anchor devices may be categorized into an initiator anchor and a responder anchor depending on the order of transmitting messages and their roles.

An initiator anchor may be called an initiator UWB anchor, an initiator anchor device, or the like, and indicate the start of a specific ranging round. The initiator anchor may also schedule ranging slots in which responder anchors operating in the same ranging round respond. An initiation message of the initiator anchor may be called an Initiator downlink TDoA message (DTM). The Initiator DTM of the initiator anchor may include a transmission timestamp. The initiator anchor may additionally transmit a complete message after receiving responses from responder anchors. The termination message from the initiator anchor may be called a Final DTM. The Final DTM may include reply times at which the responder anchors have transmitted messages. The Final DTM may also include a transmission timestamp.

A responder anchor may be referred to as a responder UWB anchor, a responder anchor device, or the like. A responder anchor may be a UWB anchor that responds to the Initiator DTM from the initiator anchor. A message with which the responder anchor responds may include a reply time to the Initiator DTM. The message with which the responder anchor responds may be referred to as a Responder DTM. The Responder DTM may also include a transmission timestamp.

A tag device may be referred to as a UWB tag, a UE, a UWB tag device, a DL-TDoA tag, or a DT-tag. The tag device may estimate its location (e.g., geographical coordinates) using a TDoA measurement based on a DTM received from an anchor device. The tag device may have prior knowledge of the location of the anchor device.

A "ranging device" may be a device capable of performing UWB ranging. In the disclosure, a ranging device may be an enhanced ranging device (ERDEV) or FiRa device as defined in IEEE 802.15.4z. The ranging device may be referred to as a UWB device.

A "UWB-enabled application" may be an application for a UWB service. For example, a UWB-enabled Application may be an application that uses an OOB connector, a secure service, and/or a framework API for configuring a UWB service, for a UWB session. In the disclosure, a "UWB-enabled Application" may be referred to shortly as an application or a UWB application. The UWB-enabled application may be a FiRa-enabled application (APP).

A "framework" may be a component that provides access to a profile, individual UWB configurations, and/or notifications. A framework may be, for example, a collection of logical software components including a profile manager, an OOB connector, a secure service, and/or a UWB service. In the disclosure, the framework may be a FiRa framework.

The "OOB connector" may be a software component for establishing an out-of-band (OOB) connection (e.g., a BLE connection) between ranging devices. In the disclosure, the OOB connector may be a FiRa OOB connector.

A "profile" may be a predefined set of UWB and OOB configuration parameters. In the disclosure, the profile may be a FiRa profile.

A "profile manager" may be a software component that implements an available profile in a ranging device. In the disclosure, the profile manager may be a FiRa profile manager.

A "service" may be an implementation of a use case that provides a service to an end-user.

A "smart ranging device" may be a ranging device capable of implementing an optional framework API. In the disclosure, the smart ranging device may be a FiRa smart device.

A "global dedicated file (GDF)" may be a root level of application specific data including data required to establish a USB session.

A "framework API" may be an API used by a UWB-enabled application to communicate with a framework.

An "initiator" may be a ranging device that initiates a ranging exchange. The initiator may initiate a ranging exchange by transmitting a first ranging exchange message (RFRAME).

An "object identifier (OID)" may be an identifier of an ADF within an application data structure.

"Out-of-band (OOB)" may be data communication that does not use UWB as an underlying radio technology.

A "ranging data set (RDS)" may be data (e.g., a UWB session key, a session ID, and so on) required for establishing a UWB session for which confidentiality, authenticity, and integrity need to be protected.

A "responder" may be a ranging device that responds to an initiator in a ranging exchange. The responder may respond to a ranging exchange message received from the initiator.

An "STS" may be a ciphered sequence to increase the integrity and accuracy of ranging measurement timestamps. The STS may be generated from a ranging session key.

A "secure channel" may be a data channel that prevents overhearing and tampering.

A "secure component" may be an entity (e.g., a secure element (SE) or a trusted execution environment (TEE)) with a defined security level, which interfaces with a UWB subsystem (UWBS) for the purpose of providing an RDS to the UWBS, for example, when a dynamic STS is used.

A "secure element (SE)" may be a tamper-resistant secure hardware component that may be used as a secure component within a ranging device.

"Secure ranging" may be ranging based on an STS generated through strong encryption.

A "secure service" may be a software component for interfacing with a secure component such as an SE or a TEE.

A "service applet" may be an applet on a secure component that handles service-specific transactions.

"Service data" may be data defined by a service provider, which needs to be transmitted between two ranging devices to implement a service.

A "service provider" may be an entity that defines and provides hardware and software required to provide a specific service to an end-user.

A "static STS mode" is a mode of operation in which an STS is repeated during a session and which does not need to be managed by a secure component.

A "secure UWB service (SUS) applet" may be an applet on an SE, which communicates with an applet to retrieve data required to enable a secure UWB session with another ranging device. The SUS applet may also transmit data (information) to a UWBS.

A "UWB service" may be a software component that provides access to a UWBS.

A "UWB session" may be a period of time from when a controller and a controlee start communicating through UWB until they stop communicating. The UWB session may include ranging, data transmission, or both ranging and data transmission.

A "UWB session ID" may be an ID (e.g., a 32-bit integer) that identifies a UWB session shared between a controller and a controlee.

A "UWB session key" may be a key used to protect a UWB session. The UWB session key may be used to generate an STS. In the disclosure, the UWB session key may be a UWB ranging session key (URSK), which may be referred to shortly as a session key.

A "UWB subsystem (UWBS)" may be a hardware component that implements UWB PHY and MAC layers (specifications). The UWBS may have an interface to a framework and an interface to a secure component for discovering an RDS.

In describing the disclosure, a detailed description of relevant known functions or configurations will be avoided, lest it should obscure the subject matter of the disclosure.

Various embodiments of the disclosure will be described with reference to the accompanying drawings.

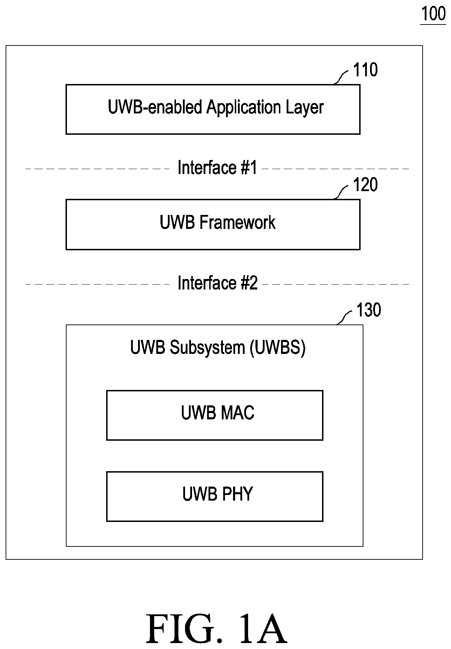

FIG. 1A illustrates an exemplary architecture of a UWB device.

In the disclosure, a UWB device 100 may be an electronic device supporting UWB communication. The UWB device (electronic device) 100 may be, for example, a ranging device supporting UWB ranging. In an embodiment, the ranging device may be an ERDEV or FiRa device as defined in IEEE 802.15.4z.

In the embodiment of FIG. 1A, the UWB device 100 may interact with another UWB device through a UWB session.

In addition, the UWB device 100 may implement a first interface Interface #1, which is an interface between a UWB-enabled application 110 and a framework 120, and the first interface allows the UWB-enabled application 110 in the UWB device 100 to use UWB capabilities of the UWB device 100 in a predetermined manner. In an embodiment, the first interface may be, but is not limited to, a framework API or a proprietary interface.

Additionally, the UWB device 100 may implement a second interface Interface #2, which is an interface between the framework 120 and a UWBS 130. In an embodiment, the second interface may be, but is not limited to, a UWB command interface (UCI) or a proprietary interface.

Referring to FIG. 1A, the UWB device 100 may include the UWB-enabled application 110, the framework (UWB framework) 120, and/or the UWBS 130 including a UWB MAC layer and a UWB physical layer. According to embodiments, some entity may not be included in the UWB device 100, or an additional entity may be included (e.g., a security layer) in the UWB device 100.

The UWB-enabled application 110 may trigger a UWB session configuration by the UWBS 130, using the first interface. Additionally, the UWB-enabled application 110 may use one of predefined profiles. For example, the UWB-enabled application 110 may use one of profiles defined in FiRa or a custom profile. The UWB-enabled application 110 may handle related events, such as service discovery, ranging notifications, and/or error conditions, using the first interface.

The framework 120 may provide access to profiles, individual UWB configurations, and/or notifications. Further, the framework 120 may support at least one of a function of performing UWB ranging and transactions, a function of providing an interface to applications and the UWBS 130, or a function of estimating the location of the device. The framework 120 may be a set of software components. As described above, the UWB-enabled application 110 may interface with the framework 120 through the first interface, and the framework 120 may interface with the UWBS 130 through the second interface.

In the disclosure, the UWB-enabled application 110 and/or the framework 120 may be implemented by an application processor (AP) (or processor). Accordingly, in the disclosure, operations of the UWB-enabled application 110 and/or the framework 120 may be understood to be performed by the AP (or processor). In the disclosure, the framework 120 may be referred to as an AP, a processor, or the like.

The UWBS 130 may be a hardware component including a UWB MAC layer and a UWB physical layer. The UWBS 130 may perform UWB session management and communicate with the UWBS of another UWB device. The UWBS 130 may interface with the framework 120 through the second interface and obtain secure data from a secure component. In an embodiment, the framework 120 (or the AP) may transmit a command to the UWBS 130 through a UCI, and the UWBS 130 may transmit a response to the command to the framework 120. The UWBS 130 may also transmit a notification to the framework 120 through the UCI.

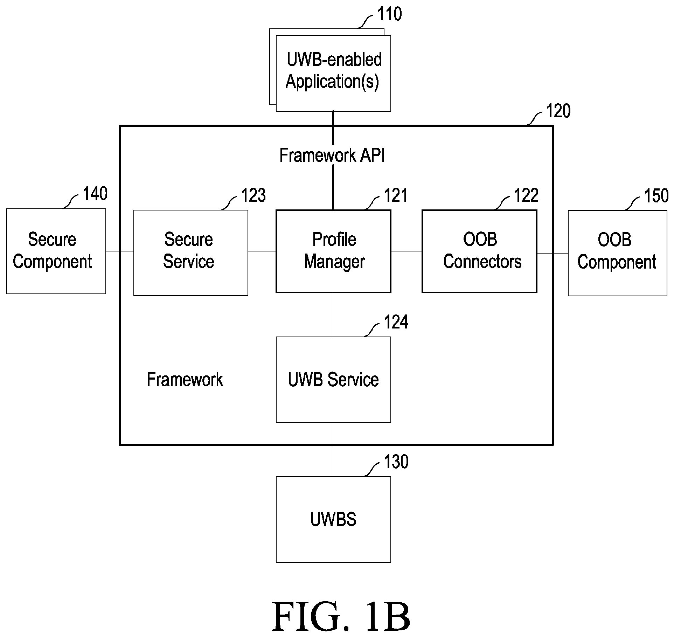

FIG. 1B illustrates an exemplary configuration of a framework in a UWB device.

The UWB device of FIG. 1B may be the UWB device of FIG. 1A.

Referring to FIG. 1B, the framework 120 may include software components such as a profile manager 121, OOB connector(s) 122, a secure service 123, and/or a UWB service 124.

The profile manager 121 may serve to manage profiles available in the UWB device. A profile may be a set of parameters required to establish communication between UWB devices. For example, the profile may include a parameter indicating which OOB secure channel is used, a UWB/OOB configuration parameter, a parameter indicating whether the use of a specific secure component is mandatory, and/or a parameter related to the file structure of an ADF. The UWB-enabled application 110 may communicate with the profile manager 121 through the first interface (e.g., a framework API).

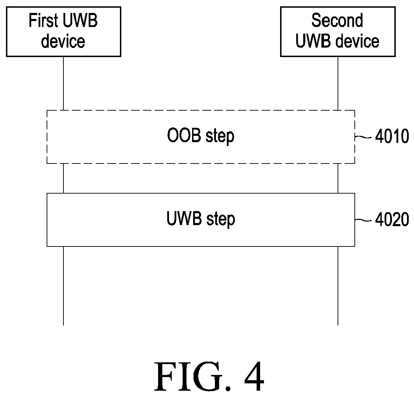

The OOB connector 122 may serve to establish an OOB connection with another device. The OOB connector 122 may handle an OOB step including a discovery step and/or a connection step. The OOB step will be described below with reference to FIG. 4. An OOB component (e.g., BLE component) 150 may be connected to the OOB connector 122.

The secure service 123 may serve to interface with a secure component 140, such as an SE or a TEE.

The UWB service 124 may serve to manage the UWBS 130. The UWB service 124 may provide access from the profile manager 121 to the UWBS 130 by implementing the second interface.

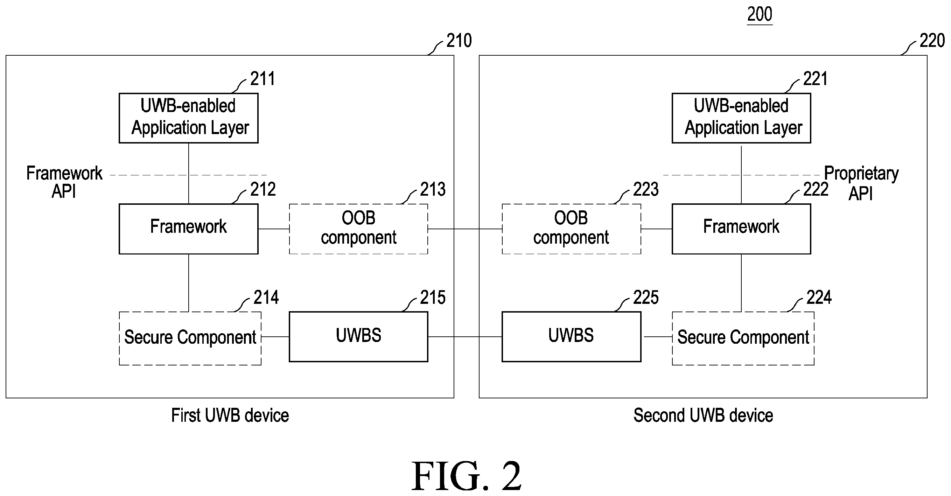

FIG. 2 illustrates an exemplary configuration of a communication system including UWB devices.

Referring to FIG. 2, the communication system includes a first UWB device 210 and a second UWB device 220. In an embodiment, the first UWB device 210 and the second UWB device 220 may be electronic devices, such as the UWB device of FIG. 1 or an electronic device including the UWB device of FIG. 1.

The first UWB device 210 may, for example, host one or more UWB-enabled applications that may be installed by a user (e.g., a mobile phone). This may be based on, for example, a framework API. The second UWB device 220 may not provide a framework API and may use a proprietary interface, for example, to implement a specific UWB-enabled application. Unlike the illustration, according to embodiments, both the first UWB device 210 and the second UWB device 220 may be ranging devices using a framework API or both the first UWB device 210 and the second UWB device 220 may be ranging devices using a proprietary interface.

The first UWB device 210 and the second UWB device 220 may include UWB-enabled application layers 211 and 221, frameworks 212 and 222, OOB components 213 and 223, secure components 214 and 224, and/or UWBSs 215 and 225. In the disclosure, the OOB components and/or the secure components are optional and may not be included in the UWB devices according to embodiments.

The frameworks 212 and 222 may serve to provide access to profiles, individual UWB configurations, and/or notifications. The frameworks 212 and 222 may be a set of software components and include, for example, a profile manager, an OOB connector, a secure service, and/or a UWB service. Refer to the descriptions above for a description of each component.

The OOB components 213 and 223 may be hardware components that include a MAC layer and/or a physical layer for OOB communication (e.g., BLE communication). The OOB components 213 and 223 may communicate with OOB components of other devices. In an embodiment, the first UWB device 210 and the second UWB device 220 may create an OOB connection (channel) using the OOB components 213 and 223, and exchange parameters for establishing a UWB session through the OOB channel. In the disclosure, the OOB components 213 and 223 may be referred to as OOB subsystems.

The UWBSs 215 and 225 may be hardware components that include a UWB MAC layer and a UWB physical layer. The UWBSs 215 and 225 may perform UWB session management and communicate with UWBSs of other UWB devices. In an embodiment, the first UWB device 210 and the second UWB device 220 may perform UWB ranging and service data transactions through a UWB session established through the UWBSs 215 and 225 using parameters exchanged with each other.

The secure components 214 and 224 may be hardware components that interface with the frameworks 212 and 222 and/or the UWBSs 215 and 225 to provide secure data.

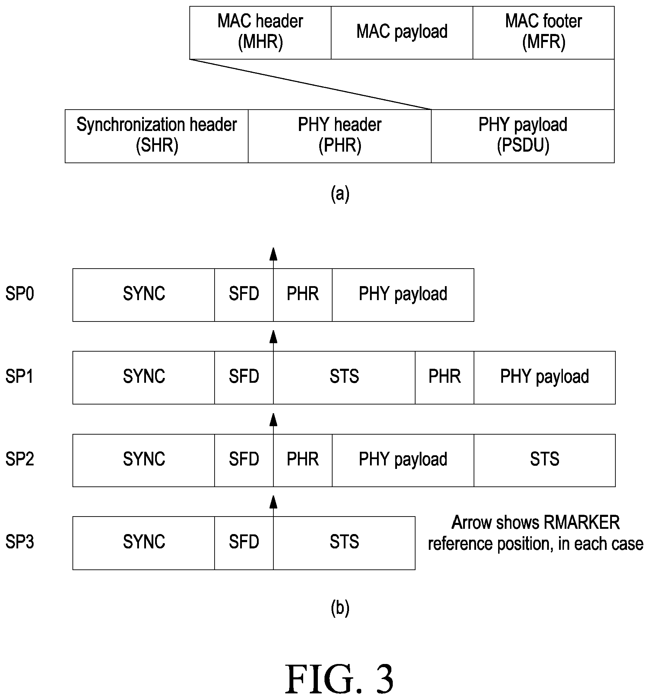

FIG. 3 illustrates an exemplary structure of a frame used for UWB communication.

FIG. 3A illustrates an exemplary structure of a frame to which an STS packet configuration is not applied, and FIG. 3B illustrates an exemplary structure of a frame to which an STS packet configuration is applied. In an embodiment, a frame may be a ranging frame (RFRAME) for carrying ranging data (e.g., a ranging initiation/response/final message or the like) or a data frame for carrying other data (e.g., service data or the like).

Referring to FIG. 3A, a frame or a PHY PDU (PPDU) for carrying a frame may include a synchronization header (SHR), a PHY header (PHR), and/or a PHY payload (PSDU).

The PSDU may include a MAC frame, and the MAC frame may include a MAC header (MHR), MAC payload, and/or a MAC footer (MFR). The MHR may include a Frame Control field that provides information such as the type of a frame, a source addressing mode, and a destination addressing mode, a Source Address field that provides a source address, and/or a Destination Address field that provides a destination address. The MAC payload may include at least one Payload IE that includes a Content field including content data. The MFR may include a CRC for error checking.

The SHR of the PPDU may include a SYNC field (or preamble field) and a start-of-frame delimiter (SFD). The SFD field may be a field indicating the end of the SHR and the start of the data field. The PHR of the PPDU may include information (e.g., a length and so on) about the PHY payload. For a description of each element/field included in the PPDU and MAC frame, refer to the descriptions defined in IEEE 802.15.4/4z and/or FiRa.

The PHY layer of a UWB device may include an optional mode to provide a reduced on-air time for a high density/low power operation. In this case, a frame may include a cyphered sequence (i.e., STS) to increase the integrity and accuracy of a ranging measurement timestamp. This STS may be used for secure ranging.

The structure of a PPDU (or frame) in the case of applying (supporting) an STS packet configuration for this STS may be given as illustrated in FIG. 3B.

Referring to FIG. 3B, for STS packet (SP) configuration 0 (SP0), an STS field is not included in a PPDU (SP0 packet). For SP configuration 1 (SP1), the STS field is placed immediately after an SFD field and before the PHR field (SP1 packet). For SP configuration 2 (SP2), the STS field is placed after the PHY payload (SP2 packet). For SP configuration 3 (SP3), the STS field is placed immediately after the SFD field, and the PPDU does not include the PHR and data fields (PHY payload) (SP3 packet). In other words, for SP3, the frame (or UWB message) does not include PHY payload including a PHR and a MAC frame.

SP0, SP1, and SP3 may be mandatory configurations that should be supported when a STS packet configuration is supported, while SP2 may be an optional configuration.

FIG. 4 illustrates an exemplary method of performing UWB communication between two UWB devices.

In the embodiment of FIG. 4, a first UWB device (a first electronic device) may act as a controller (or a controlee), and a second UWB device (a second electronic device) may act as a controlee (or a controller), which is the counterpart of the first UWB device. Further, the first UWB device may act as an initiator (or a responder), and the second UWB device may act as a responder (or an initiator), which is the counterpart of the first UWB device. Further, the first UWB device may act as a tag (or an anchor), and the second UWB device may act as an anchor (or a tag), which is the counterpart of the first UWB device.

(1) OOB step 4010

Referring to FIG. 4, the first UWB device and the second UWB device may optionally perform an OOB step 4010 prior to a UWB step 4020. In the disclosure, the OOB step 4010 may also be referred to as an OOB connection step.

The OOB step 4010 may be a step performed to discover a UWB device through an OOB channel (e.g., a BLE channel), and/or to establish and control a UWB session.

In an embodiment, the OOB step 4010 may include at least one of the following steps.

- UWB device and profile discovery. This step may be performed by advertising (e.g., BLE advertising).
- OOB connection (channel) establishment.
- Establishing a secure channel to protect a message and data.
- Exchanging parameters for establishing a UWB session through a secure channel (e.g., a UWB capability parameter (controlee capability parameter), a UWB configuration parameter, and/or a parameter related to a session key) (parameter exchange step).

In an embodiment, the parameter exchange step may include transmitting a controlee capability parameter/-message UWB_CAPABILITY to the controller by the controlee, transmitting a UWB configuration parameter/message UWB_CONFIGURATION to the controlee by the controller, and/or transmitting a session key-related parameter/message SESSION_KEY_INFO to protect a UWB session to the other UWB device by one UWB device.

In an embodiment, the controller (UWB) capability parameter and/or the session key parameter may be included and transmitted in a controlee information message CONTROLEE _INFO, which is an OOB message transmitted from the controlee to the controller. In an embodiment, the UWB configuration parameter and/or the session key parameter may be included and transmitted in a session data message SESSION_DATA, which is an OOB message transmitted from the controller to the controlee.

The controlee capability parameter UWB _CAPABILITY may include at least one parameter that provides information about device capabilities of the controlee. For example, the controlee capability parameter may include a parameter for support of a device role (initiator or responder), a parameter for multi-node support, a parameter for STS configuration support, a parameter for ranging method support, an RFRAME feature capability parameter, a parameter for angle of arrival (AoA) support, and/or a parameter for scheduled mode support.

The UWB configuration parameter UWB_CONFIGURATION may include at least one parameter used for configuring a UWB session. For example, the UWB configuration parameter may include a UWB session ID parameter, a ranging method parameter, a multi-node configuration parameter, an STS configuration parameter, a scheduled mode parameter, a time-of-flight report parameter, an AoA-related parameter, and a parameter indicating the number of slots per ranging round, a slot duration parameter, a responder slot index parameter, a MAC address mode parameter, a device MAC address parameter, a parameter indicating the number of controlees, and/or a destination (DST) MAC address parameter.

The session key information parameter SESSION_KEY_INFO may include a session key information parameter for a dynamic STS and/or a session key information parameter for a static STS. For example, the session key-related parameter for a dynamic STS may include data exchanged to generate a UWB session key or data used directly as a UWB session key. For example, the session key-related parameter for a static STS may include the ID (vendor ID) of a vendor that is a provider of a UWB-enabled application and a predefined random value (static STS IV) selected by the UWB-enabled application for the UWB device. The vendor ID may be used to configure a phyVupper64 parameter for a static STS, and the static STS IV may be used to configure a vUpper64 parameter.

(2) UWB step (4020)

Referring to FIG. 4, the first UWB device and the second UWB device may perform the UWB step 4020. In the disclosure, the UWB step 4020 may also be referred to as a UWB connection step.

The UWB step 4020 may be for performing UWB ranging and/or transmitting service data through a UWB session.

In an embodiment, the UWB step 4020 may include at least one of the following steps.

- Initiating a UWB session (UWB trigger).
- Performing UWB ranging to obtain a distance/locations between two UWB devices.
- Exchanging service data (transaction).

As described before, the OOB step 4010 is optional and may be omitted according to embodiments. For example, when UWB device discovery and/or establishment and control of a UWB session is performed through a UWB channel (in-band), the OOB step 4010 may be omitted. For example, when in-band discovery is performed, the OOB step of performing OOB discovery may be omitted. In this case, the UWB step 4010 may further include an operation of discovering a UWB device through a UWB channel and exchanging parameters for establishing a UWB session by UWB messages.

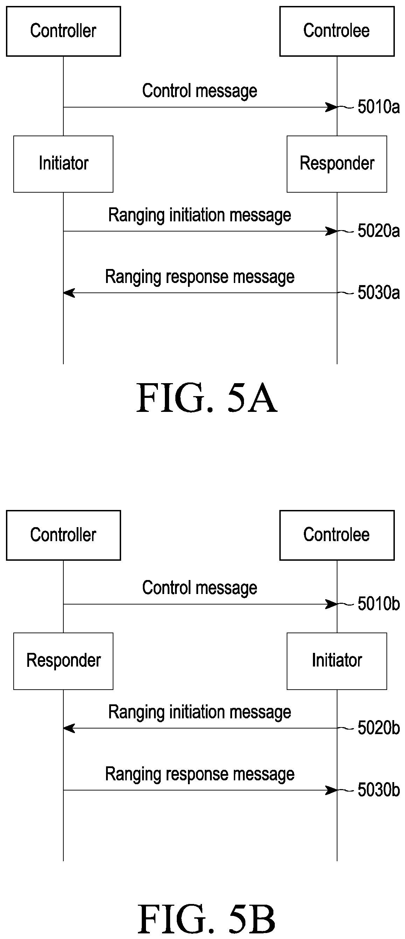

FIGS. 5A and 5B illustrate an exemplary method of performing UWB ranging by a UWB device.

In the embodiments of FIGS. 5A and 5B, UWB ranging may be, for example, single-sided two-way ranging (SS-TWR) or double-sided two-way ranging (DS-TWR).

FIG. 5A illustrates an embodiment in which a first UWB device operates as a controller/initiator and a second UWB device operates as a controlee/responder, and FIG. 5B illustrates an embodiment in which a first UWB device operates as a controller/responder and a second UWB device operates as a controlee/initiator.

In the embodiments of FIGS. 5A and 5B, messages used for UWB ranging (e.g., a ranging initiation message, a ranging response message, and/or a ranging final message) correspond to UWB messages.

Referring to FIGS. 5A and 5B, the controller may transmit a control message for UWB ranging to the controlee in operations 5010a and 5010b. The ranging control message may be used to deliver ranging parameter(s) for controlling and configuring a ranging procedure. In an embodiment, the control message may include information about the role (e.g., initiator or responder) of a ranging device, ranging slot index information, and/or information about an address of the ranging device.

In operations 5020a and 5020b, the initiator may transmit a ranging initiation message to the responder to initiate UWB ranging. In an embodiment, the initiator may transmit the ranging initiation message in an SP1 packet or an SP3 packet. When the ranging initiation message is transmitted in an SP1 packet, a control message may be included and transmitted in the PHY payload of the ranging initiation message. When the ranging initiation message is transmitted in an SP3 packet, the ranging initiation message does not include the PHR and the PHY payload.

In operations 5030a and 5030b, the responder may transmit a ranging response message to the initiator in response to the ranging initiation message. In an embodiment, the responder may transmit the ranging response message in an SP1 packet or an SP3 packet. When the ranging response message is transmitted in an SP1 packet, a first measurement report message may be included and transmitted in the PHY payload of the ranging response message. In an embodiment, the first measurement report message may include an AoA measurement, a reply time measured by the responder, and/or a list of responder addresses and round-trip time measurements of responders. A reply time field may indicate a time difference between a reception time of the ranging initiation message and a transmission time of the ranging response message from the responder. Based on this, SS-TWR may be performed. The calculation of time-of-flight (ToF) and distance/direction/location in SS-TWR is based on a method defined in IEEE 802.15.4z or FiRa.

While not shown, in the case of DS-TWR, the initiator may further transmit a ranging final message to the responder to complete the ranging exchange. When the ranging final message is transmitted in an SP1 packet, a second measurement report message may be included and transmitted in the PHY payload of the ranging final message. In an embodiment, the second measurement report message may include an AoA measurement, a round-trip time for a first responder (a first round-trip time), and/or a list of responder addresses and reply time measurements of responders. In an embodiment, a first round-trip time field may indicate a time difference between a ranging response message from the responder and a ranging final message from the initiator. Based on this, DS-TWR may be performed. The calculation of ToF and/or distance/direction/location in DS-TWR is based on a method defined in IEEE 802.15.4z or FiRa.

According to embodiments, the first measurement report message and/or the second measurement report message described above may not be included in the ranging response message and/or the ranging final message, but may be transmitted in a separate message. For example, the measurement report messages may be transmitted in a data frame after the ranging exchange.

The initiator and the responder may perform UWB ranging according to a predetermined schedule mode. For example, in a time-scheduled ranging mode, the controller may know the IDs of all controlees and specify exact schedules of ranging transmissions. In another example, in a contention-based ranging mode, the controller does not know the number and IDs of controlees, and thus UWB devices compete with each other. In this case, collision may occur between responder devices.

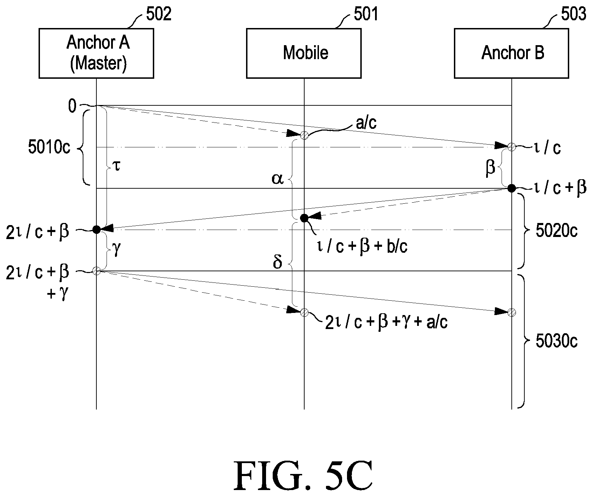

FIG. 5C illustrates another exemplary method of performing UWB ranging.

In the embodiment of FIG. 5C, the UWB ranging may be, for example, DL-TDoA.

In FIG. 5C, it is assumed that anchor device A 502 operates as an initiator anchor device. The initiator anchor device may be a device that controls ranging between a plurality of anchor devices and an electronic device.

First, in operation 5010c, anchor device A 502 may initiate TDoA by broadcasting an Initiator DTM based on scheduling information.

Referring to FIG. 5C, when a time at which the Initiator DTM is transmitted from anchor device A 502 is 0, a time at which the Initiator DTM arrives at an electronic device 501 may be a/c. In a/c, a may be a distance between anchor device A 502 and the electronic device 501, and c may be a speed at which the signal is transmitted. A time at which the Initiator DTM arrives at anchor device B 503 may be l/c. In l/c, l may be a distance between anchor device A 502 and anchor device B 503, and c may be a speed at which the signal is transmitted.

According to an embodiment, all anchor devices may be aware whether they need to transmit a Responder DTM and which slot to use to transmit the Responder DTM by referring to scheduling information in the Initiator DTM.

In operation 5020c, anchor device B 503 which has received the Initiator DTM may broadcast (transmit) a Responder DTM based on the scheduling information. Referring to FIG. 5B, $\beta$ represents a response time taken for anchor device B 503 to receive the Initiator DTM and broadcast the Responder DTM in response to the Initiator DTM. The Responder DTM may include information about the response time $\beta$.

When a time at which the Responder DTM is transmitted from anchor device B 503 is l/c + $\beta$, a time at which the Responder DTM arrives at the electronic device 501 may be l/c + $\beta$ + b/c. In b/c, b may be a distance between anchor device B 503 and the electronic device 501, and c may be a speed at which the signal is transmitted. Further, a time at which the Responder DTM arrives at anchor device A 502 may be l/c + $\beta$ + l/c = 2l/c + $\beta$.

In operation 5030c, after receiving the Responder DTM, anchor device A 502 may terminate the TDoA by transmitting a Final DTM. Referring to FIG. 5B, $\gamma$ represents a response time taken for anchor device A 502 to receive the Responder DTM and then broadcast the Final DTM. The Final DTM may include information about the response time $\gamma$.

When a time at which the Final DTM is transmitted from anchor device A 502 is 2l/c + $\beta$ + $\gamma$, a time at which the Final DTM arrives at the electronic device 501 may be 2l/c + $\beta$ + $\gamma$ + a/c. Further, a time at which the Final DTM arrives at anchor device B 503 may be 2 l/c + $\beta$ + $\gamma$ + l/c = 3 l/c + $\beta$.

As illustrated in FIG. 5C, the electronic device (e.g., mobile device) 501 may overhear the broadcast Initiator DTM, Responder DTM, and Final DTM and obtain (find out) a TDoA curve. The electronic device 501 may obtain a TDoA result by iteratively performing a computational process shown in Equation 1 on signals received from three or more anchor devices. The electronic device 501 may obtain relative positions to the anchor devices based on the TDoA result.

An application installed on the electronic device 501 may obtain the location of the electronic device 501 (e.g., the location of the electronic device 501 in a room) from the TDoA result. The application installed on the electronic device 501 may identify each anchor device related to a message based on MAC address information included in the message.

A specific computational process for deriving the difference b-a of the distances between the anchor devices 502 and 503 and the electronic device 501 from the mathematical formula $\alpha'$- $\delta'$= 2(b-a)/c +$\beta$-$\gamma$ based on time values measured at the electronic device 501 may be given as Equation 1 below.

[Equation 1]

$$\bigcirc \quad \alpha' - \delta' = (\iota + b - a)/C + \beta - (\iota + a - b)/C$$
$$- \gamma = 2(b - a)/C + \beta - \gamma$$
$$\longrightarrow b - a = (\alpha' - \delta' - (\beta - \gamma)) * C/2$$
$$\longrightarrow b - a = ((\alpha - \delta) * \frac{\tau + \gamma}{\alpha + \delta} - (\beta - \gamma)) * C/2$$

In the embodiment of FIG. 5C, the electronic device 501 may be referred to as a DT-Tag, a UWB device, a UWB tag, a tag device, or the like.

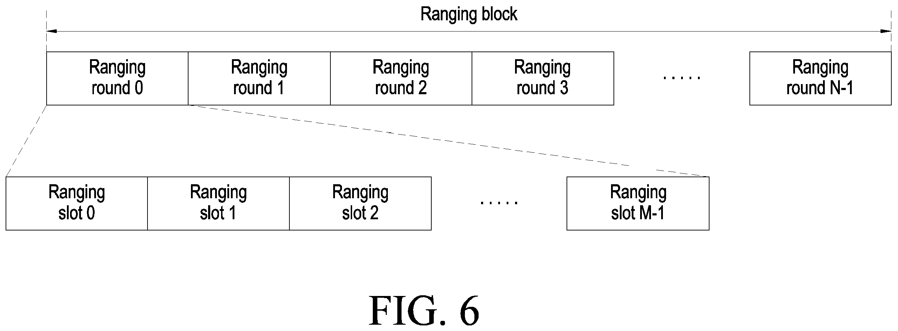

FIG. 6 illustrates exemplary structures of a ranging block and a round used for UWB ranging.

In the disclosure, a ranging block refers to a time period for ranging. A ranging round may be a period of a sufficient duration to complete one entire range-measurement cycle involving a set of UWB devices participating in a ranging exchange. A ranging slot may be a period of a sufficient duration for transmission of at least one RFRAME (e.g., a ranging initiation/response/final message or the like).

As illustrated in FIG. 6, one ranging block may include at least one ranging round, and each ranging round may include at least one ranging slot.

When a ranging mode is a block-based mode, the mean time between consecutive ranging rounds may be a constant. Alternatively, when the ranging mode is an interval-based mode, the time between consecutive ranging rounds may change dynamically. That is, the interval-based mode may adopt a time structure with an adaptive spacing.

The number of slots included in a ranging round and the duration of the ranging round may change between ranging rounds. This may be configured by a control message from a controller.

In the disclosure, a ranging block may be referred to shortly as a block, a ranging round as a round, and a ranging slot as a slot.

A description will be given below of a method of determining location information about a UWB device based on a received UWB message by the UWB device, when a user having the UWB device enters a specific place (e.g., an indoor place). Further, a method of using the determined location information by the UWB device will be described.

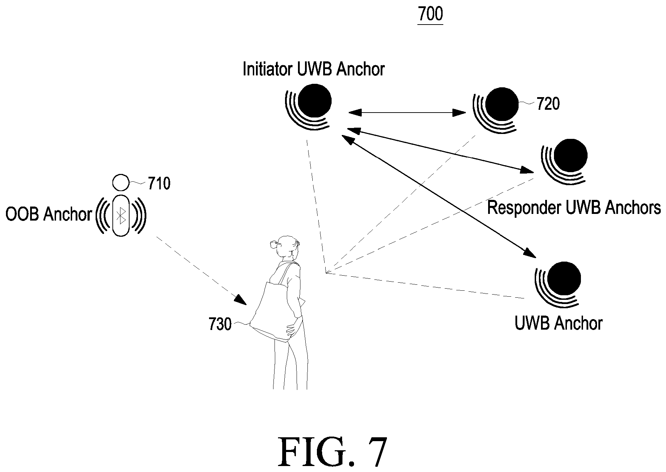

FIG. 7 illustrates an exemplary system architecture for providing a UWB-based service according to an embodiment of the disclosure.

In an embodiment, a UWB-based service (a UWB device) may be a UWB-based indoor positioning service. In this case, a system providing the UWB-based service may be referred to as an indoor positioning system (IPS). In the disclosure, a UWB-based indoor positioning service may be referred to as an IPS service.

Referring to FIG. 7, a UWB-based service providing system 700 may include at least one OOB anchor 710, at least one UWB anchor 720, and/or a user's electronic device (a UE) 730 of a user. In the disclosure, the UE 730 may be referred to as a user terminal, a user mobile device, a tag, or the like. In the disclosure, a device referred to as an anchor may be a fixed device, and a device referred to as a tag may be a mobile device.

The OOB anchor 710 is an electronic device that performs non-UWB communication (e.g., BLE communication) and may periodically or aperiodically broadcast data to the UE 730, which the UE 730 needs to obtain its location information. In an embodiment, the OOB anchor 710 may be a BLE anchor.

The UWB anchor 720, which is an electronic device performing UWB communication, may transmit and receive UWB messages for UWB ranging. In an embodiment, the UWB anchor 720 may be a UWB device acting as an initiator to transmit a ranging initiation message for UWB ranging, or a UWB device acting as a responder to transmit a ranging response message in response to a ranging initiation message transmitted by an initiator. In the disclosure, the UWB anchor 720 acting as an initiator may be referred to as an initiator UWB anchor, and the UWB anchor 720 acting as a responder may be referred to as a responder UWB anchor.

The UE 730, which is an electronic device performing OOB communication and UWB communication, may determine its location information based on data received from the OOB anchor 710 and the UWB anchor 720. In an embodiment, the UE 730 may receive at least one UWB message from the at least one UWB anchor 720 based on data received from the OOB anchor 710, and calculate its location information based on the received UWB message. Further, the UE 730 may provide a predetermined service (e.g., a navigation service) using the determined location information.

Each of embodiments will be described below on the assumption that a UWB-based service is an IPS service based on UWB. However, the embodiments are not limited to this, and the same description is applicable to a UWB-based positioning service (e.g., a UWB-based outdoor positioning service) having the same or similar characteristics as or to the IPS service.

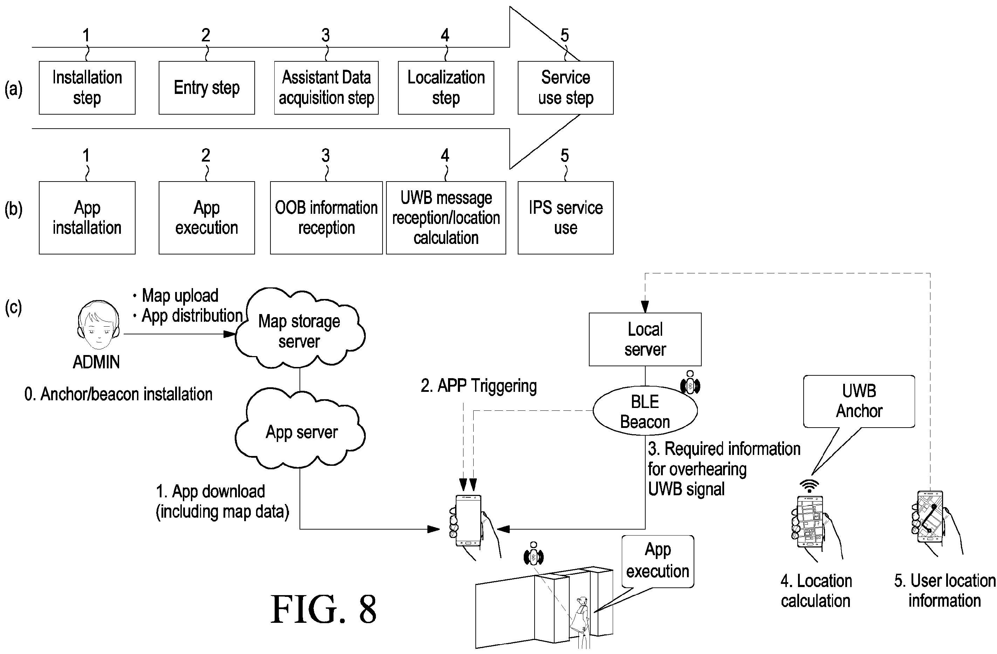

FIG. 8 illustrates an exemplary operational scenario for providing an IPS service according to an embodiment of the disclosure.

FIG. 8(a) illustrates steps of an IPS service (a UWB-based IPS service), FIG. 8(b) illustrates UE operations corresponding to the steps of the IPS service of FIG. 8(a), and FIG. 8(c) illustrates an exemplary operation flow of a system corresponding to the steps of the IPS service of FIG. 8(a). The system of FIG. 8 may be an example of the system of FIG. 7.

Referring to FIG. 8(a), the IPS service may include an installation step 1, an entry step 2, an assistant data acquisition step 3, a localization step 4, and/or a service use step 5. Meanwhile, each step in FIG. 8(a) is an exemplary step for providing the IPS service, and some step may be omitted or added according to embodiments. Further, the execution of each step may be performed in a different order from that illustrated.

Referring now to FIGS. 8(b) and 8(c), each step will be described below.

(1) Installation step

The installation step may be for installing an application (APP) for a UWB-based service in a UE. In the disclosure, the installation step may be referred to as an application installation step.

Referring to operation 1 of FIG. 8(b), in the installation step, the UE may install an APP for the UWB-based service.

For example, as in operation 0 of FIG. 8(c), prior to the installation step, at least one anchor (or beacon) (e.g., a BLE anchor and/or a UWB anchor) for the IPS service may be installed, and map data including the location of each anchor/beacon and/or data (APP data) about the APP for the IPS service may be stored in a service provider's server (service provider server). In an embodiment, the service provider server may include, for example, a map storage server and/or an APP server.

For example, as in operation 1 of FIG. 8(c), in the installation step, the UE may download data for installing the APP from the service provider server and install the APP in the UE based on the downloaded data. In an embodiment, the downloaded data may include APP data and/or map data.

(2) Entry step

The entry step may be for identifying that the UE (or user) is entering a specific location (e.g., a venue) and executing the APP. In the disclosure, the entry step may be referred to as an application execution step, an application triggering step, or the like.

Referring to operation 2 of FIG. 8(b), in the entry step, the UE may execute (or trigger) the APP.

For example, as in operation 2 of FIG. 8(c), the UE may trigger the APP based on a signal received from an OOB anchor (e.g., a BLE anchor/beacon). Alternatively, the UE may trigger the APP in a different manner. For example, the UE may trigger the APP over the Internet, based on a location value, or based on a user input.

The UE may specify a method used to determine location information through information received from the APP.

(3) Assistant data acquisition step

The assistant data acquisition step may be for obtaining assistant data required to determine the location information about the UE.

Referring to operation 3 of FIG. 8(b), in the assistant data acquisition step, the UE may receive OOB information (message) including assistant data by OOB communication rather than UWB communication.

For example, as in operation 3 of FIG. 8(c), the UE may receive the assistant data from the OOB anchor (e.g., BLE anchor/beacon). In an embodiment, the OOB anchor may be connected to a local server at the venue (e.g., a venue local server).

In an embodiment, the assistant data may include all or part of information required to determine the location information about the UE (required localization information). In an embodiment, the required localization information may include information (first information) (e.g., UWB configuration information including a UWB channel number, STS-related information (e.g., information for generating a static/fixed STS)) required to receive (or overhear) a UWB signal (message) used to determine the location information about the UE, and/or location information (second information) about a UWB anchor transmitting a UWB signal (message). In the disclosure, the required localization information may be referred to shortly as required information, the first information may be referred to as first required information, and the second information may be referred to as second required information.

In an embodiment, the first information of the required localization information may be included in assistant data received by OOB communication and the second information may be included in a UWB message received by UWB communication. In other words, the first information may be signaled in an OOB manner, and the second information may be separately signaled in an in-band manner. In this case, limited OOB message resources (e.g., those of a BLE Advertisement message) may be used efficiently.

In another embodiment, the first information and second information of the required localization information may be included in assistant data received by OOB communication. That is, both the first information and the second information may be signaled in an OOB manner. In this case, fast delivery of assistant data may be possible.

In another embodiment, assistant data including the first information and second information of the required localization information may be received through a UWB message (e.g., a UWB broadcast message).

Although the disclosure describes embodiments in which assistant data is transmitted by OOB communication, it will be apparent to those skilled in the art that some or all of the assistant data may be transmitted by UWB communication rather than OOB communication, as described above.

(4) Localization step

The localization step may be for determining location information. In the disclosure, the localization step may be referred to as a location calculation step.

Referring to operation 4 of FIG. 8(b), the UE may receive at least one UWB message based on the assistant data, and determine its location based on the received UWB message.

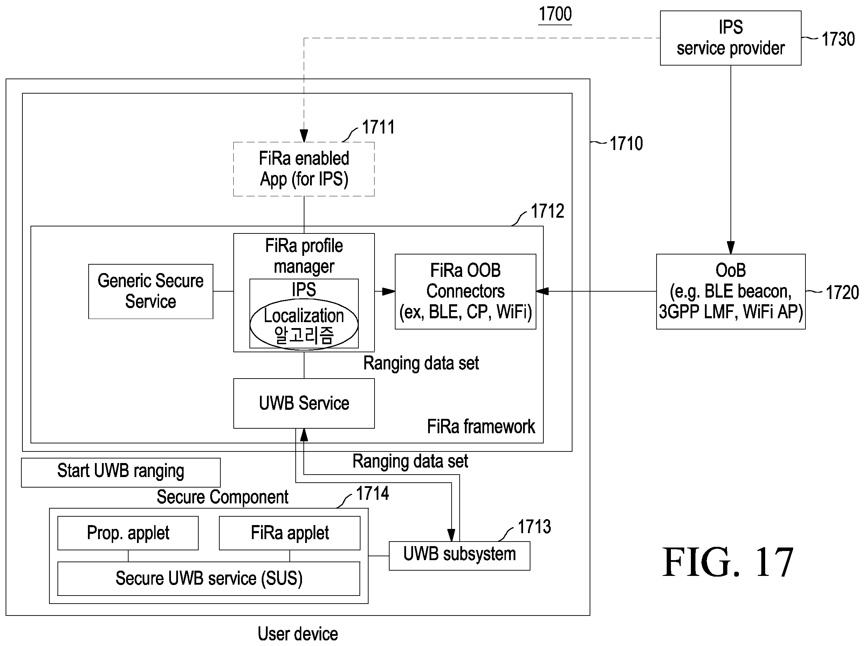

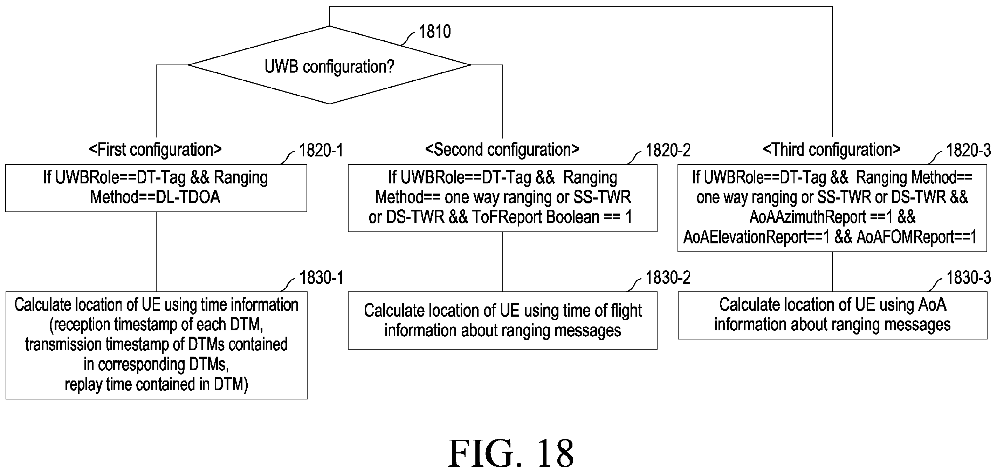

For example, as in operation 4 of FIG. 8(c), the UE may receive at least one UWB message from at least one UWB anchor, and determine its location based on the received UWB message. In an embodiment, the UE may determine its location using one of DL-TDoA, one way ranging (OWR), SS-TWR, or DS-TWR. An exemplary method of determining the location of a UE will be described below with reference to FIGS. 17 and 18.

(5) Service use step

The service use step may be for using the location information. In the disclosure, the service use step may be a step in which the IPS service or a result obtained through the IPS service is used.

Referring to operation 5 of FIG. 8(b), the UE may use the IPS service.

For example, as in operation 5 of FIG. 8(c), the UE may transmit the location information to the local server. In this case, the local server may provide a specific service (e.g., an indoor navigation service) to the UE based on the location information.

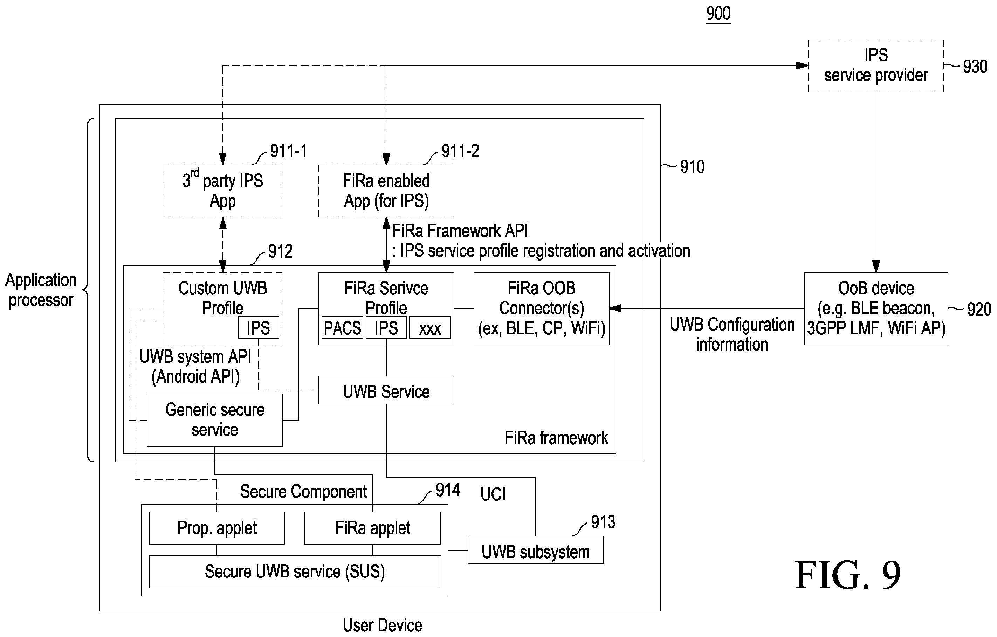

FIG. 9 illustrates an exemplary configuration of an IPS according to an embodiment of the disclosure.

Referring to FIG. 9, an IPS 900 may include a UE 910, an OOB device 920, and/or an IPS service provider 930. In the IPS, the IPS service provider 930 may be an optional component.

(1) The UE 910 may be an example of the UWB device of FIG. 1. In an embodiment, the UE 910 may include at least one application 911-1 and 911-2, a framework (FiRa framework) 912, a secure component 914, and/or a UWBS 913.

The framework 912 may perform at least one function for providing a UWB service. In an embodiment, the framework 912 may include a service profile (FiRa service profile) component, an OOB connector(s) (FiRa OOB connector(s)) component, a service component (UWB service component), and/or a secure service (generic secure service) component. For a basic description of each component, reference may be made to the descriptions of FIGS. 1 and 2.

The service profile component may support functionality for registering and/or activating a profile for at least one service (e.g., an IPS service) defined in FiRa. The service profile component may be included in a profile manager (FiRa profile manager) component.

The framework 912 may optionally further include a custom UWB profile component. The custom UWB profile component may support a function of registering and/or activating a profile for a custom UWB service (e.g., a custom IPS service). The custom UWB profile component may communicate with another component (e.g., the UWB service component) within the framework 912 through a UWB system API (e.g., Android API).

In an embodiment, the custom UWB profile component may be included in the profile manager (FiRa profile manager) component, together with the service profile component. In this case, the profile manager (FiRa profile manager) component may be used to refer to a component that includes the service profile component and the custom UWB profile component.

The OOB connector component may support a function of performing communication (e.g., BLE communication, WiFi communication, cellular communication CP using a communication processor) other than UWB communication. In an embodiment, the OOB connector component may receive assistant data (e.g., UWB configuration information) from the OOB device 920 by OOB communication. In an embodiment, an individual OOB connector component may be included for each OOB communication scheme, or a single OOB connector component may support all functions conforming to each OOB communication scheme.

The at least one application 911-1 and 911-2 may support a function of registering a profile for the IPS service (a profile registration function) with the framework and/or a function of activating a registered profile (a profile activation function). In an embodiment, the at least one application may include a FiRa-enabled APP 911-2 and/or a third party IPS APP 911-1 for providing the IPS service.

In an embodiment, the FiRa-enabled APP 911-2 may communicate with the service profile (FiRa service profile) component within the framework 912 through the framework API (FiRa framework API) for profile registration and/or profile activation. In this way, the IPS profile may be registered with the service profile component and activated.

In an embodiment, the third party IPS APP 911-1 may communicate with the custom UWB profile component within the framework through a proprietary interface, for profile registration and/or profile activation. This allows the custom IPS profile to be registered with the custom service profile component and activated.

The secure service may serve to interface with the secure component 914, such as an SE or a TEE.

The secure component 914 may support a function of storing and providing secure data. In an embodiment, the secure component 914 may include at least one applet and a secure UWB service (SUS) component.

The at least one applet may include a FiRa applet and/or a proprietary applet. In an embodiment, the FiRa applet may communicate with the FiRa service profile component through the secure service component, and the proprietary applet may communicate directly with the custom service profile component through the UWB system API.

The UWBS 913 may perform a UWB communication function. In an embodiment, the UWBS 913 may communicate with the UWB service component (or AP) (or framework) through a UCI.

As described above, the at least one application 911-1 and 911-2 and/or the framework 912 may be included in the AP.

(2) The OOB device 920 may support an OOB communication function. In an embodiment, the OOB device 920 may be a device (e.g., a BLE beacon/anchor) that supports a BLE communication function. In another embodiment, the OOB device 920 may be a device that supports 3GPP LMF functionality. In another embodiment, the OOB device 920 may be a device (e.g., a WiFi AP) that supports WiFi communication functionality.

In an embodiment, the OOB device 920 may transmit assistant data (e.g., UWB configuration information) to the UE 910, for providing the IPS service.

(3) The IPS service provider 930 may support a function of providing at least one application for the IPS service and/or a function of providing related data. The IPS service provider 930 may communicate with the UE 910 and/or the OOB device 920 to provide the IPS service.

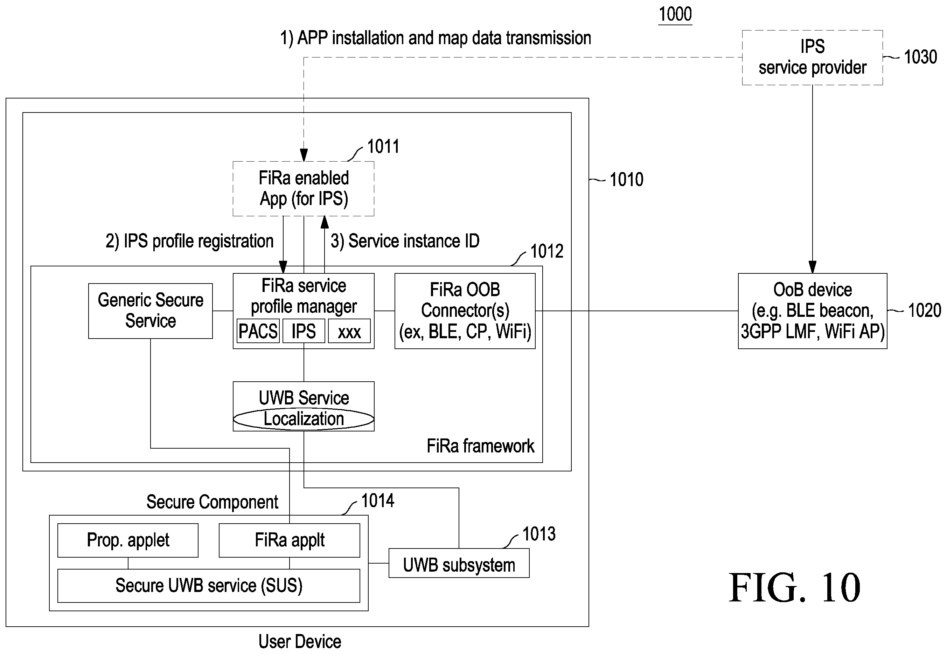

FIG. 10 illustrates operations of the installation step in an IPS according to an embodiment of the disclosure.

The installation step in the embodiment of FIG. 10 may be an example of the installation step of FIG. 8. An IPS 1000 of FIG. 10 may have the configuration of the IPS of FIG. 9. For example, the IPS 1000 may include a UE 1010 including at least one application 1011, a framework 1012, a secure component 1013, and/or a UWBS 1014, an OOB device 1020, and/or an IPS service provider 1030.

The embodiment of FIG. 10 is based on the assumption that registration of a profile for an IPS service is performed by a FiRa-enabled APP and a FiRa profile manager component (FiRa service profile component) for the IPS service. However, the embodiment is not limited to this, and it will be apparent to those skilled in the art that the same embodiment may be performed by a third party IPS application and a custom profile manager component for the IPS service.

In the disclosure, a profile (service profile) may be a set of configurations used to provide an application support service. For example, an IPS service profile may include service configuration information, OOB configuration information, and/or UWB configuration information for providing the IPS service.

Referring to FIG. 10, in operation 1, the IPS service provider 1030 may transmit data for installing an application for the IPS service and/or map data to the UE 1010. In this way, the FiRa-enabled APP 1011 for the IPS service may be installed on the UE 1010. In the disclosure, the FiRa-enabled APP 1011 for the IPS service may be referred to shortly as an IPS application.

In operation 2, the IPS application 1011 may transmit a request (command) for registration of a profile for the IPS service to a FiRa profile manager component through a framework API. In an embodiment, the IPS application 1011 may use a FIRAServiceInit API to register the IPS application itself or a profile (FiRa profile) with the framework 1012.

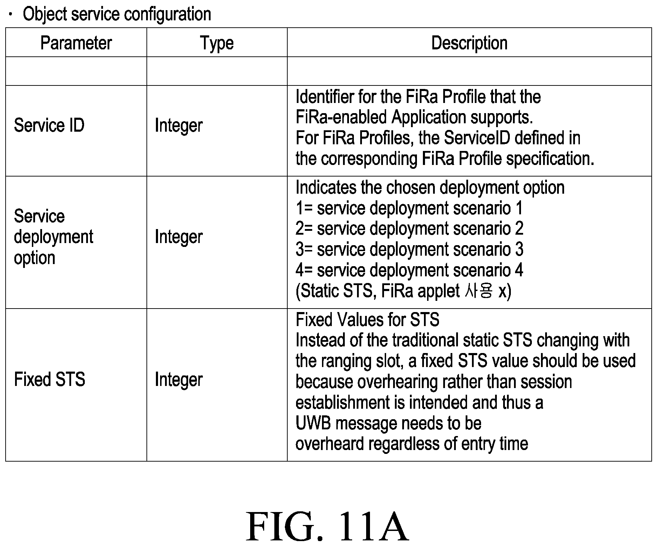

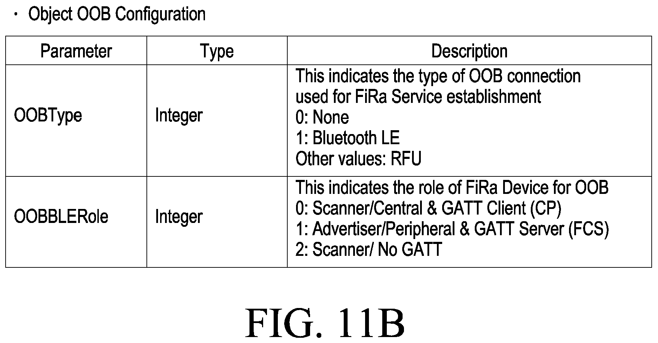

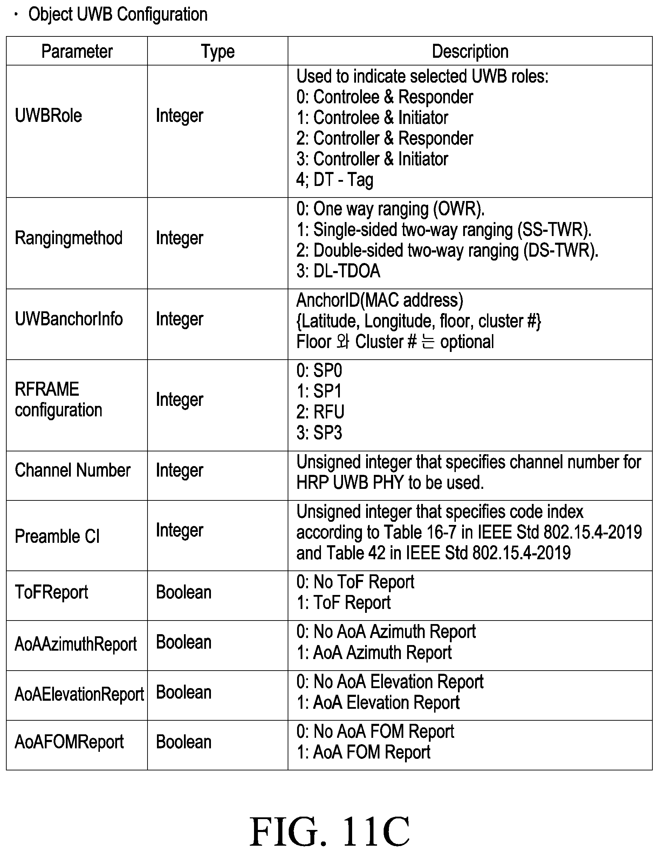

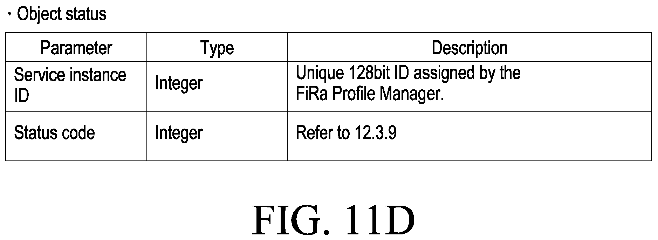

In an embodiment, the FIRAServiceInit API may be used by the FiRa-enabled APP 1011 so that the framework 1012 instantiates a profile or request application of a specific configuration. In an embodiment, the FIRAServiceInit API may include a request (Status FIRAServiceInit) that includes a ServiceConfiguration object, a UWBConfiguration object, and/or an OOBConfiguration object, and a response that includes a Status object. Each object will be described below with reference to FIG. 11.

Based on the request, the FiRa profile manager component may register the profile for the IPS service. In an embodiment, the FiRa profile manager component may instantiate the profile for the IPS service, apply a configuration (e.g., ServiceConfiguration, UWBConfiguration, and/or OOBConfiguration) included in the request, and/or generate service instance ID information corresponding to the profile (or a service of the profile). Thus, the profile for the IPS service may be registered, and the service instance ID information may be generated to identify the profile for the IPS service or the IPS service.

In operation 3, the FiRa profile manager component may transmit a response including the service instance ID information corresponding to the registered profile to the IPS application 1011 through the framework API. In an embodiment, the FiRa profile manager component may use the FIRAServiceInit API to transmit the response including the service instance ID information.

FIGS. 11A, 11B, 11C, and 11D illustrate parameters included in a request and response for registering a profile for an IPS service according to an embodiment of the disclosure.

In the embodiments of FIGS. 11A, 11B, 11C, and 11D, a request (request message) is transmitted from an IPS application to a FiRa profile manger component (framework), for registration of a profile for an IPS service, and a response (response message) is transmitted from the FiRa profile manger component (framework) to the IPS application in response to the request.

The request (command) and response of FIGS. 11A, 11B, 11C, and 11D may be based on a FIRAServiceInit API which is, for example, based on a Status FIRAServiceInit (ServiceConfiguration, UWBConfiguration, OOBConfiguration) function.

In an embodiment, the request may include a ServiceConfiguration object, a UWBConfiguration object, and/or an OOBConfiguration object, and the response may include a Status object.

FIG. 11A may be an example of a ServiceConfiguration object, Object ServiceConfiguration. The ServiceConfiguration object may be used to instantiate a profile and map it to a specific application (service).

The ServiceConfiguration object may include, for example, a serviceID field, a serviceDeploymentOption field, and/or a Fixed STS field, as illustrated in FIG. 11A.

The serviceID field may be an ID of a profile (FiRa profile) supported by the application (FiRa-enabled APP).

The serviceDeploymentOption field may indicate a selected deployment option. In an embodiment, the serviceDeploymentOption field may be set to one of a first value (e.g., 1) indicating service deployment scenario 1, a second value (e.g., 2) indicating service deployment scenario 2, a third value (e.g., 3) indicating service deployment scenario 3, or a fourth value (e.g., 4) indicating service deployment scenario 4. Herein, service deployment scenario 4 may be a service deployment scenario that uses a static STS (or fixed STS) and does not use an applet (FiRa applet). In an embodiment, service deployment scenario 4 may be a service deployment scenario for the IPS service.

The Fixed STS field may indicate a fixed value for an STS. Unlike a static STS having a value variable for each ranging slot, a fixed STS is characterized by an STS value always fixed. The fixed STS may be an embodiment of the static STS.

In an embodiment, since a specific parameter (e.g., a phySlotCount parameter) for generating the static STS includes a counter value incremented for each slot, the generation of a static STS performed by the UE may provide a different STS for each slot based on the counter value. Accordingly, a plurality of STSs corresponding respectively to a plurality of slots included in a round may be different from each other.

In another embodiment, the specific parameter (e.g., the phySlotCount parameter) for generating a static STS may include a fixed value. For example, the phySlotCount parameter may be a constant as a predetermined value rather than a counter value incremented for each slot. In this case, the static STS may have the same value for every slot. That is, the static STS may be a fixed STS.

In a scenario for the IPS service, the UE may use an STS to overhear a UWB message from another UWB device (anchor) to determine its location (DL-TDoA case), instead of using the STS to establish a secure session. In this case, the UE needs to use a fixed STS value regardless of when it enters (i.e., any ranging slot), to receive a UWB message from another UWB device.

FIG. 11B may be an example of an OOBConfiguration object. The OOBConfiguration object may be used to configure OOB parameters.

The OOBConfiguration object may include an OOBType field and/or an OOBBLERole field, for example, as illustrated in FIG. 11(b).

The OOBType field may indicate the type of an OOB connection used to establish a service (FiRa service). In an embodiment, the OOBType field may be set to a first value (e.g., 1) indicating BLE connection.

The OOBBLERole field may indicate the role of a device (FiRa Device) for OOB GAP or GATT. In an embodiment, the OOBBLERole field may be set to one of a first value (e.g., 0) indicating Scanner/Central and GATT Client, a second value (e.g., 1) indicating Advertiser/Peripheral & GATT Server, or a third value (e.g., 2) indicating Scanner/No GATT.

When the OOBBLERole field is set to the third value indicating Scanner/No GATT, the device performs the role of Scanner for BLE advertising, but does not perform the role of Central for a BLE connection and the role of GATT Client for data communication through the BLE connection. In an embodiment, for the IPS service, the OOBBLERole field for the UE may be set to the third value (DL-TDoA case). In this case, the UE, acting as a scanner, may receive a BLE Advertisement message from a BLE anchor, acting as an advertiser, containing information necessary to receive (or overhear) a UWB signal (message) used to determine location information about the UE.

FIG. 11C may be an example of a UWBConfiguration object. The UWBConfiguration object may be used to configure UWB parameters.

The UWBConfiguration object may include, for example, a UWBRole field, a RangingMethod field, a UWBanchorInfo field, an RFRAMEConfiguration field, a ChannelNumber field, a PreambleCI (PreambleCodeIndex) field, a ToFReport field, an AoAAzimuthReport field, an AoAElevationReport field, and/or an AoAFOMReport field, as illustrated in FIG. 11C.

The UWBRole field may be used to indicate a selected UWB role. In an embodiment, the UWBRole field may be set to one of a first value (e.g., 0) indicating Controlee & Responder, a second value (e.g., 1) indicating Controlee & Initiator, a third value (e.g., 2) indicating Controller & Responder, a fourth value (e.g., 3) indicating Controller & Initiator, or a fifth value (e.g., 4) indicating DT-Tag. DT-Tag may indicate that the device acts as a tag (e.g., a tag to determine its location using DL-TDoA). In an embodiment, for the IPS service, the UWBRole field for the UE may be set to a value of 5 (DL-TDoA case). In this case, the UE may act as a tag to determine its location using DL-TDoA, as illustrated in FIG. 5B. In the disclosure, a DT-tag may also be referred to as a tag.

The RangingMethod field may indicate a ranging method. In an embodiment, the RangingMethod field may be set to one of a first value (e.g., 0) indicating OWR, a second value (e.g., 1) indicating SS-TWR, a third value (e.g., 2) indicating DS-TWR, or a fourth value (e.g., 3) indicating DL-TDoA. In an embodiment, for the IPS service, the RangingMethod field for the UE may be set to the fourth value (DL-TDoA case). In this case, the UE may use DL-TDoA as the ranging method.

The UWBanchorInfo field may include information about a UWB anchor. In an embodiment, the UWBanchorInfo field may include location information about each UWB anchor identified by a UWB anchor ID. In an embodiment, the location information may include a latitude and a longitude. The location information may optionally further include a floor and/or a cluster number (cluster #). Thus, an accurate indoor location may be determined. In an embodiment, the UWB anchor ID may be the MAC address of the corresponding UWB anchor.

In the disclosure, a cluster may refer to a set of UWB anchors covering a specific area. The cluster may include an initiator UWB anchor and responder UWB anchors that respond to the initiator UWB anchor. For 2D positioning, one initiator UWB anchor and at least three responder UWB anchors are typically required, and for 3D positioning, one initiator UWB anchor and at least four responder UWB anchors are required. To support the IPS service over a large area, multiple clusters may be configured to provide the IPS service to UEs.

The RFRAMEConfiguration field may indicate an RFRAME configuration. In an embodiment, the RFRAMEConfiguration field may be set to one of a first value (e.g., 0) indicating SP0, a second value (e.g., 1) indicating SP1, or a third value (e.g., 3) indicating SP3.

The ChannelNumber field may indicate the number of a UWB channel to be used. In an embodiment, the ChannelNumber field may indicate a channel number for a HRP UWB PHY to be used.

The PreambleCI field may be an integer specifying a code index according to Table 16-7 of IEEE Std 802.15.4-2019 and Table 42 of IEEE Std 802.15.4-2019.

The ToFReport field may indicate the presence of a ToFReport within a UWB message (e.g., RFRAME) (or whether the ToFReport is used for location information determination). In an embodiment, the ToFReport field may be set to one of a first value (e.g., 0) indicating no ToFReport or a second value (e.g., 1) indicating the presence of a ToFReport.

The AoAAzimuthReport field may indicate the presence of an AoAAzimuthReport within the UWB message (e.g., RFRAME) (or whether the AoAAzimuthReport is used for location information determination). In an embodiment, the AoAAzimuthReport field may be set to one of a first value (e.g., 0) indicating no AoAAzimuthReport or a second value (e.g., 1) indicating the presence of an AoAAzimuthReport.

The AoAElevationReport field may indicate the presence of an AoAElevationReport within the UWB message (e.g., RFRAME) (or whether the AoAElevationReport is used for location information determination). In an embodiment, the AoAElevationReport field may be set to one of a first value (e.g., 0) indicating no AoAElevationReport or a second value (e.g., 1) indicating the presence of an AoAElevationReport.

The AoAFOMReport field may indicate the presence of an AoAFOMReport within the UWB message (e.g., RFRAME) (or whether the AoAFOMReport is used for location information determination). In an embodiment, the AoAFOMReport field may be set to one of a first value (e.g., 0) indicating no AoA FOM (figure of merit) Report or a second value (e.g., 1) indicating the presence of an AoAFOMReport.

FIG. 11D may be an example of a Status object. In an embodiment, the Status object may include a serviceInstanceID field and/or a statusCode field.

The serviceInstanceID field indicates an ID (service instance ID) assigned by the profile manager (FiRa profile manager). As described above, this service instance ID may be used to identify a profile (or a service of the profile). In the case of the IPS service, an ID value may be assigned by the profile manager to identify the profile for the IPS service (or identify the IPS service).

The statusCode field may include one of predefined values of statusCode. This allows the FiRa enabled APP to determine the processing status of a registration request for the profile.

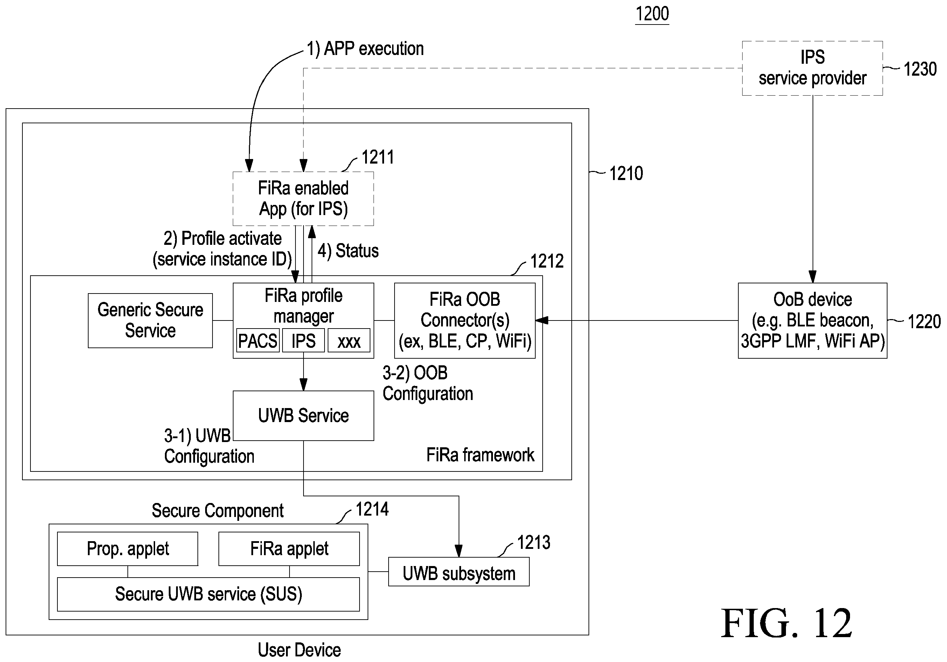

FIG. 12 illustrates operations of the entry step in an IPS according to an embodiment of the disclosure.

The entry step of the embodiment of FIG. 12 may be an example of the entry step of FIG. 8. The IPS of FIG. 12 may have the configuration of the IPS of FIG. 9. For example, an IPS 1200 may include a UE 1210 that includes at least one application 1211, a framework 1212, a security component 1213, and/or a UWBS 1214, an OOB device 1220, and/or an IPS service provider 1230.

The embodiment of FIG. 12 is based on the assumption that activation of a profile for an IPS service is performed by a FiRa-enabled APP and a FiRa profile manager component for the IPS service. However, it will be apparent to those skilled in the art that the embodiment is not limited to this, and that the same embodiment may be performed by a third party IPS application and a custom profile manager component for the IPS service.

Referring to FIG. 12, in operation 1, the IPS application (FiRa-enabled APP) 1211 may be executed (or triggered). In an embodiment, the IPS application 1211 may be executed in at least one scheme. For example, the IPS application 1211 may be triggered by a signal from an OOB anchor, through the Internet, based on a location value, or based on a user input.

In operation 2, the application 1211 may transmit a request (command) to the profile manager (FiRa profile manager) of the framework 1212 to activate a profile (IPS profile) for the IPS service. In an embodiment, the request may include a service instance ID of the profile for the IPS service.

In an embodiment, the request may be made using a frame API, FIRAServiceActivate API. The FIRAServiceActivate API may be an API for activating a FiRa profile or custom profile that the FiRa-enabled APP has previously registered using the FiRaServiceInit API.

The profile manager may activate the profile based on this request. For example, the profile manager may identify the service instance ID of the IPS profile included in the request and activate the IPS profile corresponding to the service instance ID.

In operation 3 (3-1/3-2), the profile manager may configure UWB configuration parameters and/or OOB configuration parameters corresponding to the activated profile.

For example, as in operation 3-1, the profile manager may transmit UWB configuration parameters (e.g., the UWB configuration parameters of FIG. 11C) corresponding to the activated IPS profile to a UWB service component, and the UWB service component may transmit the UWB configuration parameters to the UWBS 1214 through the UCI. This allows the UWB configuration parameters to be configured in the UWBS 1214.

For example, as in operation 3-2, the profile manager may transmit OOB configuration parameters (e.g., the OOB configuration parameters of FIG. 11(b)) corresponding to the activated IPS profile to the OOB connector (FiRa OOB connector) component. This allows the OOB configuration parameters to be configured in the OOB connector component.

In operation 4, the profile manager may transmit a response including Status to the application. This response may be to the request for activating the profile for the IPS service in operation 2. In an embodiment, the response may be made using the framework API, FIRAServiceActivate API.

Through these operations of the entry step, the UE 1210 may configure the UWB configuration parameters and OOB configuration parameters corresponding to the activated profile for the IPS service, which enables the UE 1210 to perform UWB communication and OOB communication according to the configurations.

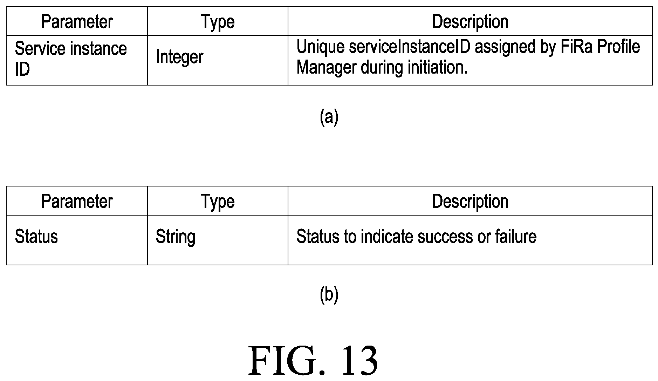

FIG. 13 illustrates parameters included in a request and response for activation of a profile for an IPS service according to an embodiment of the disclosure.

In the embodiment of FIG. 13, a request (request message) is transmitted from an IPS application to a FiRa profile manger component (framework), for activation of a profile for an IPS service, and a response (response message) is transmitted from the FiRa profile manger component (framework) to the IPS application in response to the request.

The request and response of FIG. 13 may be based on the FIRAServiceActivate API which is, for example, based on a Status FIRAServiceActivate(serviceInstanceID) function.

FIG. 13(a) may be an example of a request for activation of a profile for an IPS service (an IPS profile). In an embodiment, the request may include a serviceInstanceID field.

The serviceInstanceID field may indicate a service instance ID for an IPS profile, assigned by the FiRa profile manager.

FIG. 13(b) may be an example of a response to a request for activation of a profile for an IPS service. In an embodiment, the response may include a Status field.

The Status field may indicate success or failure of activation of an IPS profile.

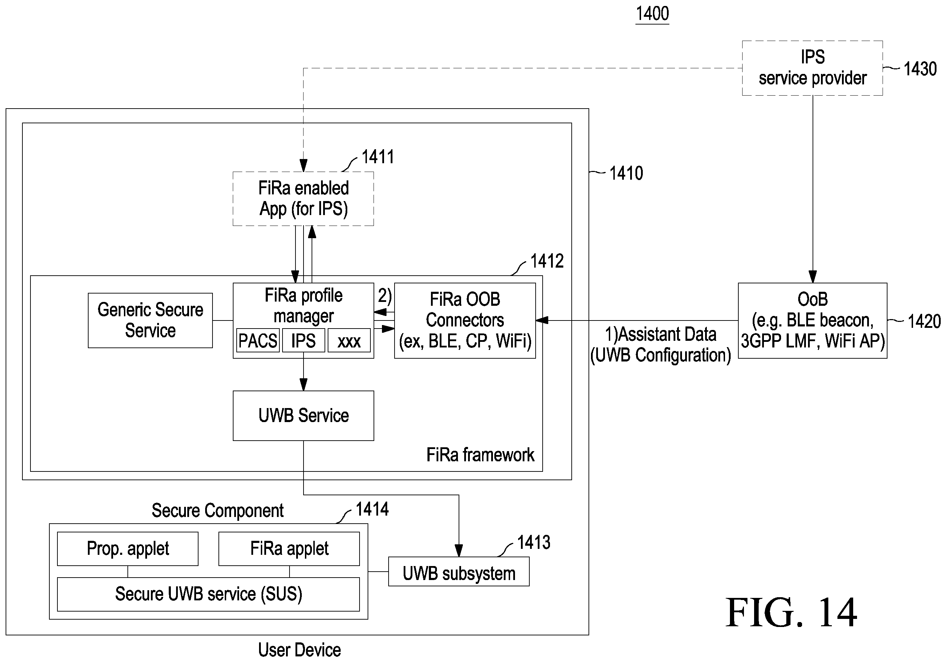

FIG. 14 illustrates operations of the assistant data acquisition step in an IPS according to an embodiment of the disclosure.

The assistant data acquisition step of the embodiment of FIG. 14 may be an example of the assistant data acquisition step of FIG. 8. The IPS of FIG. 14 may have the configuration of the IPS of FIG. 9. For example, an IPS 1400 may include a UE 1410 that includes at least one application 1411, a framework 1412, a security component 1413, and/or a UWBS 1414, an OOB device 1420, and/or an IPS service provider 1430.

The embodiment of FIG. 14 is based on the assumption that assistant data is received by OOB communication. However, the embodiments is not limited thereto, and all or part of the assistant data may be received by in-band communication (UWB communication) or other communication schemes.

Referring to FIG. 14, in operation 1, the UE 1410 may receive assistant data from the OOB device 1420. In an embodiment, the UE 1410 may receive the assistant data through the FiRa OOB connector of the framework 1412.

In an embodiment, the UE 1410 may receive an advertisement packet/message including the assistant data from a BLE anchor/beacon.

In an embodiment, the assistant data may include information required to receive (or overhear) a UWB message. For example, the assistant data may include UWB configuration information required to receive (or overhear) the UWB message. For example, the assistant data may include at least one of the fields (parameters) included in the UWB configuration object of FIG. 11C. For example, the assistant data may include a UWBRole field, a RangingMethod field, a ChannelNumber field, and/or a PreambleCI field. The assistant data may further include a UWBanchorInfo field, a ToFReport field, an AoAAzimuthReport field, an AoAElevationReport field, and/or an AoAFOMReport field.

In operation 2, the FiRa OOB connector may transmit the received assistant data to the FiRa profile manager. The FiRa profile manager may apply a UWB configuration included in the received assistant data to the UWBS 1414. Therefore, the UWBS 1414 may be activated.

Through the operations of the assistant data acquisition step, the UE 1410 may be able to overhear a UWB message from another UWB device in order to determine its location.

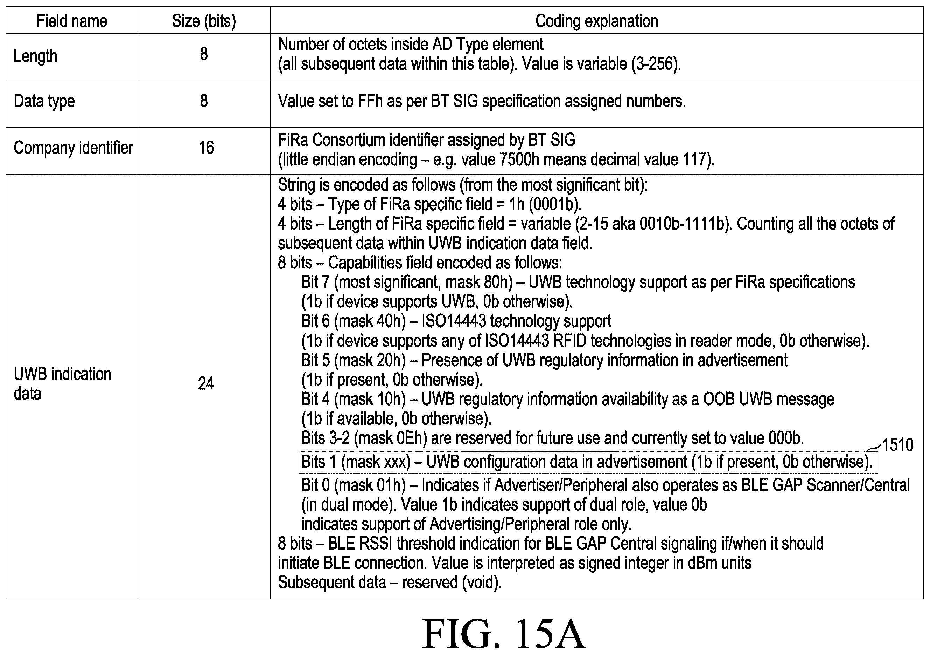

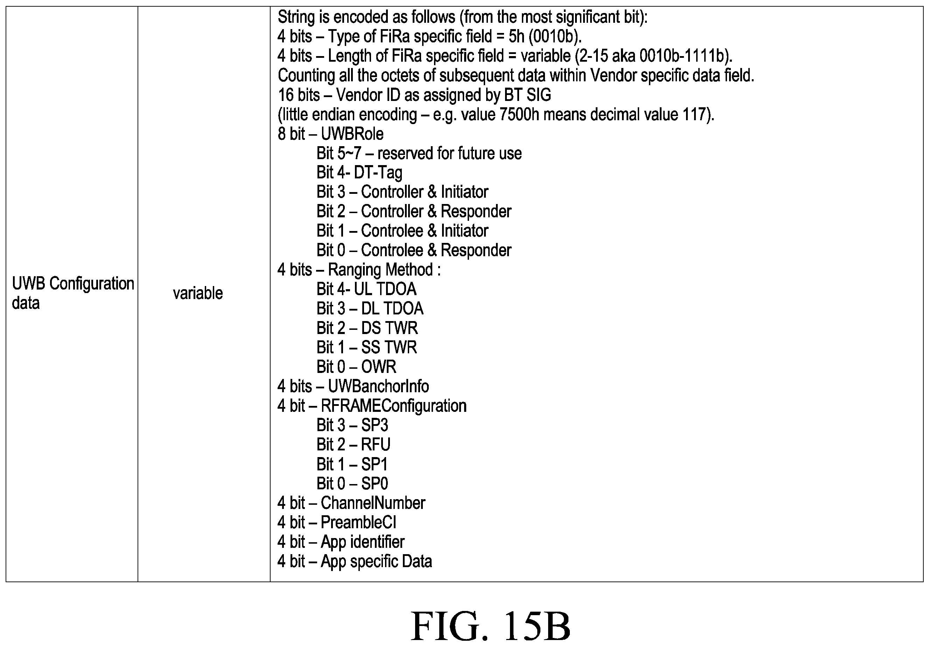

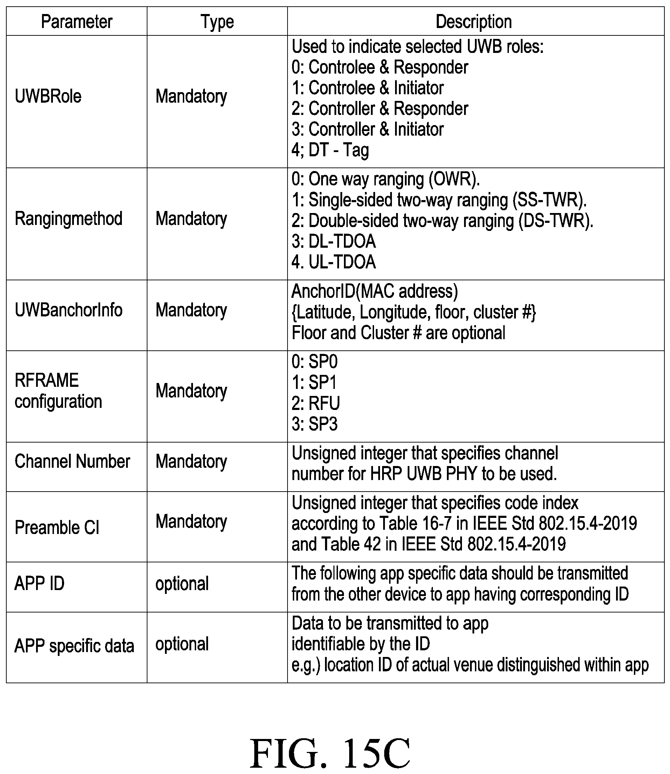

FIGS. 15A, 15B, and 15C illustrate a BLE Advertisement message including assistant data according to an embodiment of the disclosure.

FIGS. 15A and 15B illustrate one example of a BLE Advertisement message (packet) including assistant data. Referring to FIGS. 15A and 15B, the BLE Advertisement message may include a Length field, a Data Type field, a Company Identifier field, a UWB indication data field, and/or a UWB Configuration data field. FIG. 15C illustrates an example of the UWB indication data field of FIG. 15B.

Referring to FIG. 15A, the Length field may indicate the number of octets in an Advertising Data (AD) Type element.

The Data Type field may indicate the type of AD data. In an embodiment, the Data Type field may be set to a value indicating "Manufacturer Specific Data" (e.g., FFh).

The Company Identifier field may indicate a FiRa Consortium ID (FiRa ID) assigned by the Bluetooth Special Interest Group (BT SIG).

The UWB indication data field may include a Type field, a Length field, a Capabilities field, and/or a BLE RSSI threshold indication field.

The Type field may be set to a value indicating the type of a FiRa specific field (UWB indication data field).

The Length field may be set to a value indicating the length of the FiRa specific field (UWB indication data field).

The Capabilities field may include information about related capabilities (capability information). For example, the Capabilities field may include capability information such as information indicating whether a specific technology (e.g., UWB technology or RFID UWB technology) is supported, and information indicating the presence or absence of specific information (e.g., UWB regulatory information). In an embodiment, the Capabilities field may be a bit mask of 8 bits.

In an embodiment, the Capabilities field may include information 1510 (first indication information) indicating whether the UWB Configuration data field is present in the BLE Advertisement message. For example, as illustrated, one bit of the Capabilities field may be allocated for the first indication information. In this case, the first indication information 1510 may be set to one of a first value (e.g., 1) indicating that the UWB Configuration data field is present in the BLE Advertisement message or a second value (e.g., 2) indicating that the UWB Configuration data field is not present in the BLE Advertisement message.

The BLE RSSI threshold indication field may indicate a BLE RSSI threshold indication for BLE GAP central signaling, when a BLE connection should be initiated.

Referring to FIGS. 15B and 15C, the UWB Configuration data field may include a Type field, a Length field, a Vendor ID field, a UWBRole field, a Ranging Method field, a UWBanchorInfo field, an RFRAMEConfiguration field, a ChannelNumber, a PreambleCI field, an App identifier field, and/or an App specific Data field.

The Type field may be set to a value indicating the type of the FiRa specific field (UWB Configuration data field).

The Length field may be set to a value indicating the length of the FiRa specific field (UWB Configuration data field).

The Vendor ID field may be set to the ID of a vendor (e.g. a provider of the FiRa-enabled APP), as assigned by the BT SIG.

The UWBRole field may be used to indicate a selected UWB role. In an embodiment, the UWBRole field may be set to one of a first value (e.g., 0) indicating Controlee & Responder, a second value (e.g., 1) indicating Controlee & Initiator, a third value (e.g., 2) indicating Controller & Responder, a fourth value (e.g., 3) indicating Controller & Initiator, or a fifth value (e.g., 4) indicating DT-Tag. Herein, DT-Tag may indicate that the device acts as a tag (e.g., as a tag to determine its location using DL-TDoA). In an embodiment, for the IPS service, the UWBRole field for the UE may be set to a value of 5 (DL-TDoA case). In this case, the UE may act as a tag to determine its location using DL-TDoA.

The RangingMethod field may indicate a ranging method. In an embodiment, the RangingMethod field may be set to one of a first value (e.g., 0) indicating OWB, a second value (e.g., 1) indicating SS-TWR, a third value (e.g., 2) indicating DS-TWR, a fourth value (e.g., 3) indicating DL TDoA, or a fifth value (e.g., 4) indicating UL TDoA. In an embodiment, for the IPS service, the RangingMethod field for the UE may be set to the fourth value (DL-TDoA case). In this case, the UE may use DL-TDoA as the ranging method.

The UWBanchorInfo field may include information about a UWB anchor. In an embodiment, the UWBanchorInfo field may include location information about each UWB anchor identified by a UWB anchor ID. In an embodiment, the location information may include a latitude and a longitude. The location information may optionally further include a floor and/or a cluster number (cluster #). In an embodiment, the UWB anchor ID may be the MAC address of the corresponding UWB anchor.

The RFRAMEConfiguration field may indicate an RFRAME configuration. In an embodiment, the RFRAMEConfiguration field may be set to one of a first value (e.g., 0) indicating SP0, a second value (e.g., 1) indicating SP1, or a third value (e.g., 3) indicating SP3.

The ChannelNumber field may indicate the number of a UWB channel to be used. In an embodiment, the ChannelNumber field may indicate a channel number for the HRP UWB PHY to be used.

The PreambleCI field may be an integer specifying a code index according to Table 16-7 of IEEE Std 802.15.4-2019 and Table 42 of IEEE Std 802.15.4-2019.

The App identifier (ID) field may indicate the identity of an application to which data included in the App specific Data field should be delivered.

The App specific data field may include data that should be delivered to the application identified by the App ID field. For example, the App specific Data field may include data of the location/ID of a physical venue distinct within the application. For example, services may be provided at multiple venues through a single application, in which case the data of the location/ID of a venue where the user is physically located among the multiple venues may be provided through the App specific data field. This allows the user to use the application to receive a specific service offered at each venue.

The App identifier (ID) field and the App specific data field may be optional.

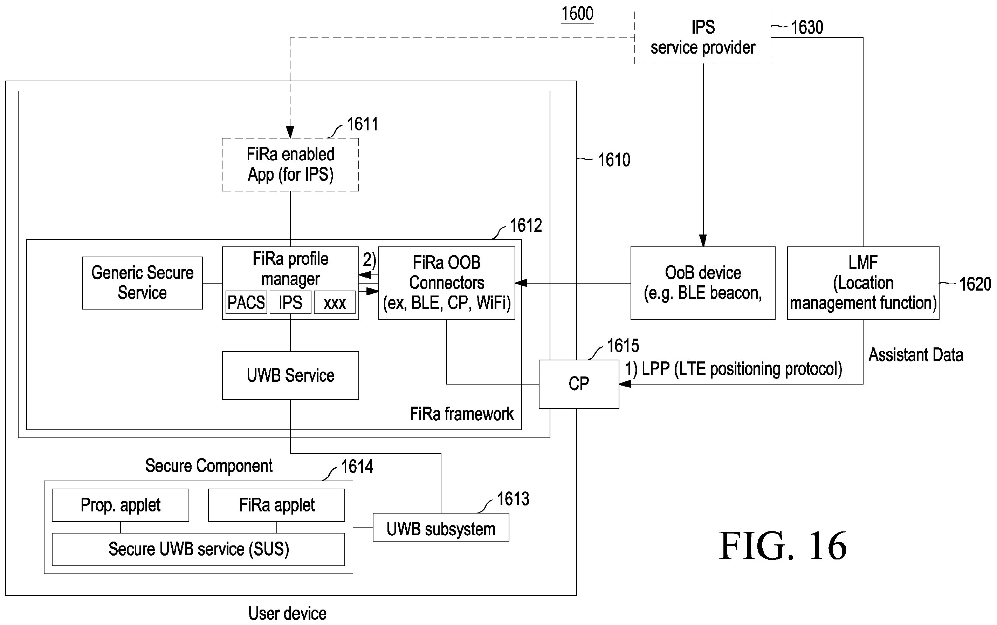

FIG. 16 illustrates operations of the assistant data acquisition step in an IPS according to another embodiment of the disclosure.

The assistant data acquisition step of the embodiment of FIG. 16 may be an example of the assistant data acquisition step of FIG. 8. The IPS of FIG. 16 may have the configuration of the IPS of FIG. 9. For example, an IPS 1600 may include a UE 1610 that includes at least one application 1611, a framework 1612, a security component 1613, and/or a UWBS 1614, a location management function (LMF) 1620, and/or an IPS service provider 1630.

The embodiment of FIG. 16 is based on the assumption that assistant data is received over a 3GPP network.

However, the embodiment is not limited thereto, and all or part of the assistant data may be received through in-band communication (UWB communication) or other communication schemes.

Referring to FIG. 16, in operation 1, the UE 1610 may receive assistant data from the LMF 1620. In an embodiment, the UE 1610 may receive the assistant data through a CP 1615.

In an embodiment, the UE 1610 may receive a packet/message (e.g., an LTE positioning protocol (LPP) packet/message) including the assistant data from the LMF 1620 of the core network of a 3GPP system.

In an embodiment, the assistant data may include information required to receive (or overhear) a UWB message. For example, the assistant data may include UWB configuration information required to receive (or overhear) the UWB message. For example, the assistant data may include at least one of the fields (parameters) included in the UWB Configuration object of FIG. 11C. For example, the assistant data may include a UWBRole field, a RangingMethod field, a ChannelNumber field, and/or a PreambleCI field. The assistant data may further include a UWBanchorInfo field, a ToFReport field, an AoAAzimuthReport field, an AoAElevationReport field, and/or an AoAFOMReport field.

In operation 2, the CP 1615 may transmit the received assistant data to a FiRa profile manager through a FiRa OOB Connector, or directly to the FiRa profile manager without the FiRa OOB connector. The FiRa profile manager may apply a UWB configuration included in the received assistant data to the UWBS 1614. Therefore, the UWBS 1614 may be activated.

Through the operations of the assistant data acquisition step, the UE 1610 may be able to overhear a UWB message from another UWB device in order to determine its location.

FIG. 17 illustrates operations of the localization step in an IPS according to another embodiment of the disclosure.

The localization step of the embodiment of FIG. 17 may be an example of the localization step of FIG. 8. The IPS of FIG. 17 may have the configuration of the IPS of FIG. 9. For example, an IPS 1700 may include a UE 1710 that includes at least one application 1711, a framework 1712, a security component 1713, and/or a UWBS 1714, an OOB device 1720, and/or an IPS service provider 1730.

In the embodiment of FIG. 17, the UE 1710 may determine its location by performing UWB ranging based on UWB configuration information included in assistant data. This will be described below with reference to FIG. 18.

Referring to FIG. 17, in operation 1, the UWBS 1714 may obtain a ranging data set (RDS) for UWB ranging. In an embodiment, the UWBS 1714 may obtain the RDS directly from a FiRa applet of the secure component 1713 or through the framework 1712. In an embodiment, the RDS may include a set of ranging data (e.g., a ranging session ID, a service ID, a fixed value for STS generation, a drive channel, and a preamble CI value) for DL-TDoA, a set of ranging data (e.g., a ranging session ID and a ranging session key) for SS-TWR, or a set of ranging data (e.g., a ranging session ID and a ranging session key) for DS-TWR.

The UWBS 1714 may then use the RDS to perform UWB ranging with another UWB device (a UWB anchor). In an embodiment, the UWB ranging may be performed using one of DL-TDoA, OWR, SS-TWR, or DS-TWR. As described above, information indicating the selected ranging method (RangingMethod information/field) of UWB ranging may be included in the assistant data.

The UWBS 1714 may transmit information obtained through the UWB ranging to the framework 1712 through a UCI. The information obtained through the UWB ranging may include, for example, a reception timestamp of each DT message (DTM), a transmission timestamp of DTM(s) included in the DTM(s), and/or a reply time included in the DTM(s).

The framework 1712 may calculate the location of the UE by applying a preset localization algorithm based on location information about the UWB anchor provided by the profile manager and information obtained through the UWB ranging. In an embodiment, the localization algorithm may be stored in the profile manager component.

FIG. 18 illustrates a method of performing UWB ranging based on a UWB configuration by a UE according to an embodiment of the disclosure.

The UE of the embodiment of FIG. 18 may be the UE in the IPS of FIG. 9.

(1) Referring to FIG. 18, the UE may identify a UWB configuration to determine its location based on UWB configuration information (1810). In an embodiment, the UWB configuration information may be included in assistant data.

In an embodiment, the UWB configuration may be one of a first configuration using DL-TDoA, a second configuration using ToF report information, or a third configuration using AoA-related report information.

In an embodiment, the first configuration may be a configuration based on UWB configuration information including a UWBRole field set to a value indicating DT Tag and/or a Ranging Method field set to a value indicating DL-TDoA (1820-1).

In an embodiment, the second configuration may be a configuration based on UWB configuration information including a UWBRole field set to a value indicating DT Tag, a Ranging Method field set to a value indicating OWR or SS-TWR or DS-TWR, and/or a ToFReport field set to a value indicating that a ToF Report is included in a UWB message (e.g., RFRAME) for UWB ranging (1820-2).

In an embodiment, the third configuration may be a configuration based on UWB configuration information including a UWBRole field set to a value indicating DT Tag, a Ranging Method field set to a value indicating OWR or SS-TWR or DS-TWR, an AoAAzimuthReport field set to a value indicating that the UWB message for UWB ranging includes an AoA Azimuth Report, and a UWB message for UWB ranging (e.g., RFRAME), an AoAElevationReport field set to a value indicating that an AoA Elevation Report is included in the UWB message for UWB ranging, and/or an AoAFOMReport field set to a value indicating that an AoA FOM Report is included in the UWB message for UWB ranging (1820-3).

(2) When the UWB configuration is the first the configuration, the UE may obtain time information required for DL-TDoA from at least one UWB message received from at least one UWB anchor, and calculate the location of the UE based on the time information (1830-1). For example, when UWB configuration information is identified, which includes a UWBRole field set to a value indicating DT Tag and a Ranging Method field set to a value indicating DL-TDoA (e.g., in the case of "UWBRole==DT-Tag && Ranging Method==DL-TDOA"), the UE may obtain the time information required for DL-TDoA from the at least one UWB message and calculate the location of the UE based on the time information. In an embodiment, the time information required for DL-TDoA may include a reception timestamp of each DT message (DTM) (e.g., Initiator DTM, Responder DTM, and/or Final DTM), a transmission timestamp of the DTM(s) included in the DTM(s), and/or a reply time included in the DTM(s). In an embodiment, the UE may use the DL-TDoA method disclosed in FIG. 5B.

(3) When the UWB configuration is the second configuration, the UE may obtain ToF information about a UWB message (ranging message) and use the ToF information to calculate the location of the UE (1830-2). For example, when UWB configuration information is identified, which includes a UWBRole field set to a value indicating DT Tag, a Ranging Method field set to a value indicating OWR or SS-TWR or DS-TWR, and a ToFReport field set to a value indicating that a ToF Report is included in a UWB message (e.g., RFRAME) for UWB ranging (e.g., "UWBRole==DT-Tag && Ranging Method== one way ranging or SS-TWR or DS-TWR && ToFReport Boolean == 1" case), the UE may obtain the ToF information about the UWB message (ranging message) and use the ToF information to calculate its location. In an embodiment, the UE may perform UWB ranging with at least one other UWB device using the DS-TDoA method or the SS-TDoA method disclosed in FIG. 5A.

(4) When the UWB configuration is the third configuration, the UE may obtain AoA-related information (e.g., AoA Azimuth information, AoA Elevation information, and/or AoA FOM Report) included in the UWB message (ranging message) and use the AoA-related information to calculate its location (1830-3). For example, when UWB configuration information is identified, which includes a UWBRole field set to a value indicating DT Tag, a Ranging Method field set to a value indicating OWR or SS-TWR or DS-TWR, a AoAAzimuthReport field set to a value indicating that the AoA Azimuth Report is included in a UWB message for UWB ranging (e.g., RFRAME), a AoAElevationReport field set to a value indicating that the AoA Elevation Report is included, and a AoAFOMReport field set to a value indicating that the AoA FOM Report is included in the UWB message for UWB ranging (e.g., " UWBRole==DT-Tag && Ranging Method== one way ranging or SS-TWR or DS-TWR && AoAAzimuthReport ==1 && AoAElevationReport==1 && AoAFOMReport==1" case), the UE may transmit the AoA-related information (e.g., AoA Azimuth Information, AoA Elevation Information, and/or AoA FOM Report) included in the UWB message (ranging message) and use the AoA-related information to calculate its location. In an embodiment, the UE may perform UWB ranging with at least one other UWB device using the DS-TDoA method or the SS-TDoA method disclosed in FIG. 5A.

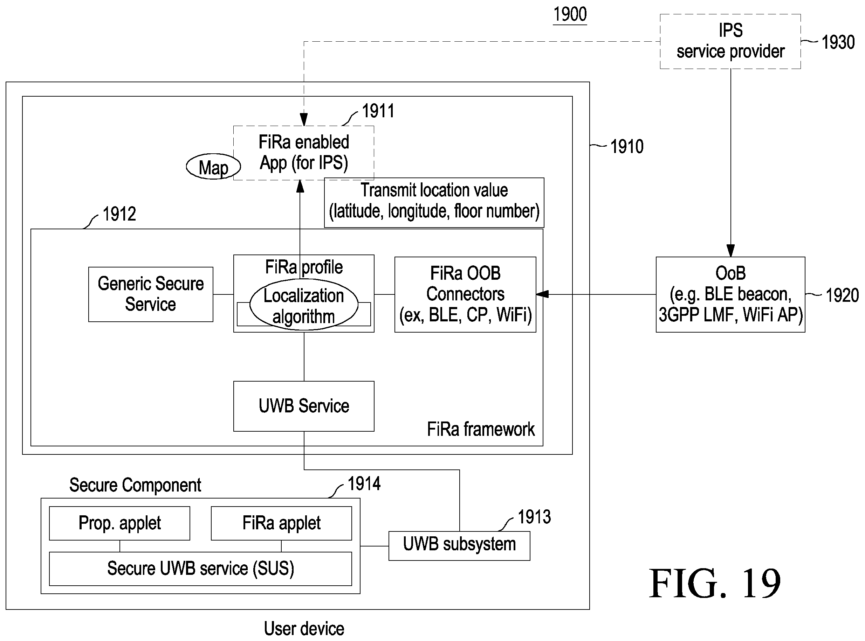

FIG. 19 illustrates operations of the service use step in an IPS according to an embodiment of the disclosure.

The service use step of the embodiment of FIG. 19 may be an example of the service use step of FIG. 8. The IPS of FIG. 19 may have the configuration of the IPS of FIG. 9. For example, an IPS 1900 may include a UE 1910 that includes at least one application 1911, a framework 1912, a security component 1913, and/or a UWBS 1914, an OOB device 1920, and/or an IPS service provider 1930.

In the service use step for the IPS service, the UE 1910 may use a result obtained through the IPS service.

Referring to FIG. 19, in operation 1, a profile manager of the framework 1912 may transmit a notification including result data obtained through the IPS service to the FiRa-enabled APP 1911. In an embodiment, the result data obtained through the IPS service may include location information about the UE 1910 (or user). In an embodiment, the location information about the UE 1910 may include information about a latitude, a longitude, and/or a floor level at which the UE 1910 is located.

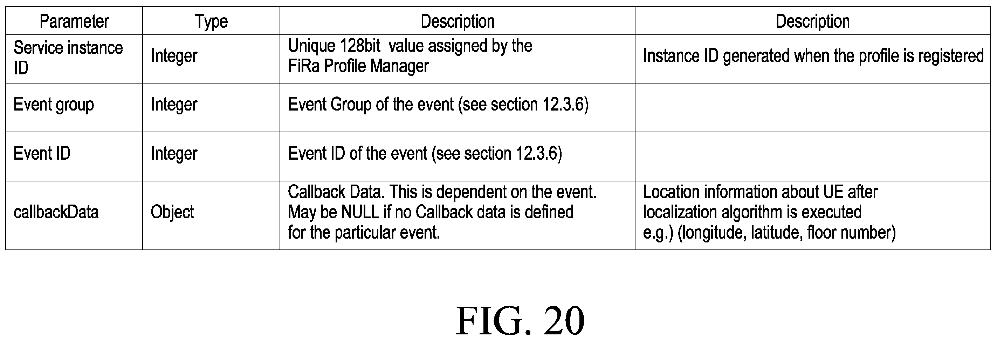

In an embodiment, the profile manager may transmit the location information about the UE 1910 to the FiRa-enabled APP 1911 through a framework API. For example, the profile manager may transmit the location information to the FiRa-enabled APP 1911 through a framework API, FIRANotificationCallback. The FIRANotificationCallback API may be used, when there is an event of interest to be notified from the FiRa-enabled APP 1911 or the FiRa framework 1912 in which the profile of the FiRa-enabled APP is registered. The FIRANotificationCallback API will be described below with reference to FIG. 20.

In operation 2, the FiRa-enabled APP 1911 may use the received location information about the UE 1910 to provide a specific service. For example, the FiRa-enabled APP 1911 may provide a navigation service (e.g., an indoor navigation service) to the user using map data and the received location information about the UE 1910.

FIG. 20 illustrates parameters included in a notification for transmitting result data of an IPS service according to an embodiment of the disclosure.

The notification of FIG. 20 may be based on the FIRANotificationCallback API which is, for example, based on a void FIRANotificationCallback(serviceInstanceID, EventGroup, EventID, callbackData) function. In an embodiment, the FIRANotificationCallback API includes a notification transmitted from the framework to the FiRa-enabled APP, and no response (return value) is required.

Referring to FIG. 20, the notification may include a serviceInstanceID field, an eventGroup field, an eventID field, and/or a callbackData field.

The serviceInstanceID field may be an ID that identifies a FiRa profile (e.g., an IPS profile) assigned by the FiRa profile manager. As described above, the serviceInstanceID field may be generated, when the profile is registered.

The eventGroup field may indicate the event group of the event.

The eventID field may specify the ID of the event.

The callbackData field may include callback data. The callbackData field may be dependent on the event. For example, when an event based on an IPS service occurs (e.g., a localization algorithm execution event occurs for the IPS service), the callback data may include location information about the UE. In an embodiment, the location information may include a latitude and a longitude indicating the location of the UE. The location information may further include a floor number indicating the location of the UE.

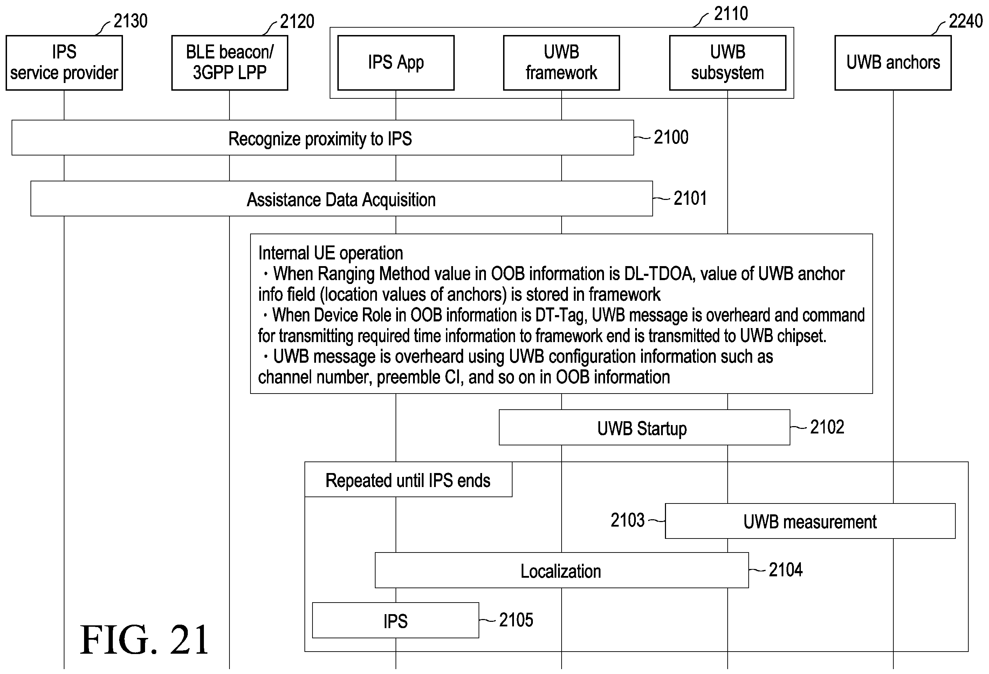

FIG. 21 is a flowchart illustrating an operational procedure in an IPS according to an embodiment of the disclosure.

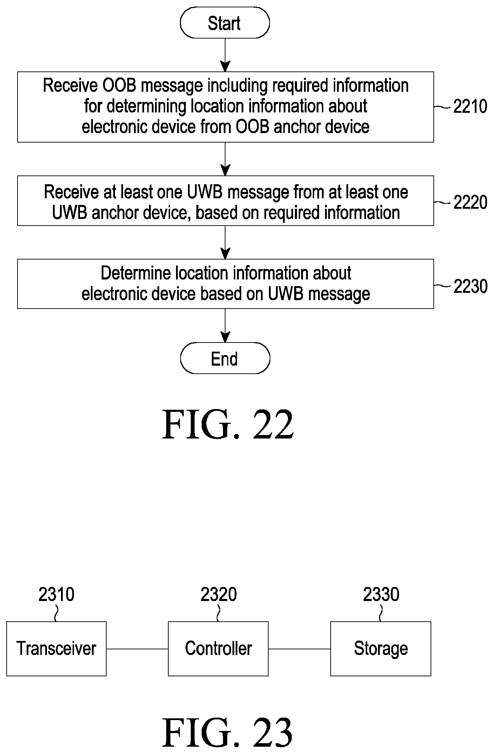

FIG. 22 is a flowchart illustrating an operational procedure in an IPS according to an embodiment of the disclosure.

The system of FIG. 21 may be an example of the system of FIG. 9. For example, the system may include a UE 2110, an OOB device (BLE beacon/3GPP LPP) 2120, an IPS service provider 2130, and/or UWB anchor(s) 2240. In describing FIG. 21, a description redundant to those of FIGS. 7 to 20 will be avoided.

Referring to FIG. 21, in operation 2100, proximity of the UE 2110 to the IPS may be recognized (identified). For example, it may be identified that the UE 2110 has entered an area of the IPS service. When it is identified that the UE 2110 has entered the area of the IPS service, the above-described operations of the entry step in FIGS. 8, 12, and 13 may be performed.

In operation 2101, the UE 2110 may receive (obtain) assistant data from the OOB device 2120 (e.g., a BLE beacon and/or a 3GPP LPP). The operation of obtaining the assistant data has been described with reference to FIG. 8 and FIGS. 14 to 16.

Upon acquisition of the assistant data, the UE 2110 may perform at least one of the following operations (internal operations).

- Storing the value of the UWB anchor info field (e.g., location values of anchors) in the framework, when the value of the Ranging Method in OOB information of the assistant data indicates DL-TDOA.
- Transmitting a command to a UWB chipset (UWBS) to overhear a UWB message and transmit required time information to a framework end, when the value of the Device Role in the OOB information of the assistant data indicates DT-Tag.
- Overhearing a UWB message by using UWB configuration information such as a channel number, a Preamble CI, and so on in the OOB information of the assistant data.

In operation 2102, the UE 2110 may initiate UWB communication. For example, the framework of the UE 2110 may initiate UWB communication by activating the UWBS.

In operation 2103, the UE 2110 may perform a UWB measurement. In an embodiment, the UE 2110 may perform UWB ranging through the UWBS to receive at least one UWB message from the at least one UWB anchor 2240 and perform a UWB measurement based on the received UWB message. The UWB ranging operation has been described with reference to FIGS. 17 and 18.

In operation 2104, the UE 2110 may perform a localization operation. In an embodiment, the UE 2110 may perform the localization operation based on the UWB measurement. In an embodiment, the localization operation may be performed through the IPS application, framework, and UWBS of the UE. For the localization operation, reference may be made to the descriptions of FIGS. 8, 17, and 18.

In operation 2105, the UE 2110 may use a service (IPS service). In an embodiment, the service use operation may be performed through an IPS application in the UE 2110. For the service use operation, reference may be made to the descriptions of FIGS. 8, 19, and 20.

In an example, operations 2103 to 2105 may be performed repeatedly until the IPS service is terminated.

FIG. 22 is a flowchart illustrating a method of an electronic device according to an embodiment of the disclosure.

In the embodiment of FIG. 22, the electronic device may correspond to any UE in FIGS. 8 to 21. In the embodiment of FIG. 22, the electronic device may be referred to as a UWB device. In FIG. 22, a description redundant to the descriptions of FIGS. 1 to 21 will be omitted.

Referring to FIG. 22, the electronic device may receive an OOB message including information required to determine location information about the electronic device from an OOB anchor device (OOB anchor) (2210). The required information may be information included in assistant data described above (required localization information described above).

Based on the required information, the electronic device may receive at least one UWB message from at least one UWB anchor device (UWB anchor) (2220).

Based on the UWB message, the electronic device may determine its location information (2230).

In an embodiment, the required information may include first required information for receiving the UWB message.

In an embodiment, the first required information may include information indicating a UWB role of the electronic device and information indicating a UWB ranging method for receiving the UWB message, wherein the UWB role may include a role indicating that the electronic device is a UWB tag device using DL-TDoA, and wherein the UWB ranging method may include DL-TDoA. In an embodiment, the required information may further include second required information indicating the location of at least one UWB anchor device.

In an embodiment, the at least one UWB message may further include the second required information indicating the location of the at least one UWB anchor device.

In an embodiment, the OOB message may correspond to a BLE Advertisement message broadcast from the OOB anchor device, and the BLE Advertisement message may include flag information indicating whether the assistant data including the required information is included in the BLE Advertisement message. An example of the BLE Advertisement message is illustrated in FIG. 15.

Further, the electronic device may register a profile for an application (e.g., an IPS application) associated with the location information determination, and generate a service instance ID to identify the registered profile.

In an embodiment, OOB configuration information may include OOB BLE role information indicating a role of the OOB corresponding to BLE, and the OOB BLE role information may be set to a value indicating Scanner/No GATT.

In an embodiment, registering the profile includes transmitting a request from the application to a profile management entity for registering the profile, wherein the request may include service configuration information including information for generating a fixed STS, OOB configuration information including BLE related information, and UWB configuration information for UWB ranging.

Further, the electronic device may execute the application, activate the profile for the application based on the service instance ID, and apply the UWB configuration and the OOB configuration corresponding to the activated profile.

In an embodiment, the execution of the application may be based on signals received from the OOB anchor device, signals received through the Internet, the location of the electronic device, or a user input.

FIG. 23 illustrates a structure of an electronic device according to an embodiment of the disclosure.

A UWB device or UE described with reference to FIGS. 1 to 22 may correspond to the electronic device of FIG. 23.

Referring to FIG. 23, the electronic device may include a transceiver 2310, memory 2320, and a controller 2330.

Referring to FIG. 23, the electronic device may include a transceiver 2310, a controller 2320, and a storage 2330. In the disclosure, the controller may be defined as a circuit or application specific integrated circuit or at least one processor.

The transceiver 2310 may transmit and receive signals to and from other entities. For example, the transceiver 2310 may transmit and receive data to and from other devices using UWB communication and/or OOB communication (e.g., BLE).

The controller 2320 may provide overall control to the operations of the electronic device according to an embodiment of the disclosure. For example, the controller 2320 may control a signal flow between blocks to perform the operations according to the flowcharts described above. Specifically, the controller 2320 may control, for example, the UE operations described with reference to FIGS. 1 to 22 (e.g., assistant data reception and localization).

The storage 2330 may store at least one of information transmitted and received through the transceiver 2310 or information generated through the controller 2320. For example, the storage 2330 may store information and data required for the methods described with reference to FIGS. 1 to 22. In an embodiment, the storage may include service profile data described above.

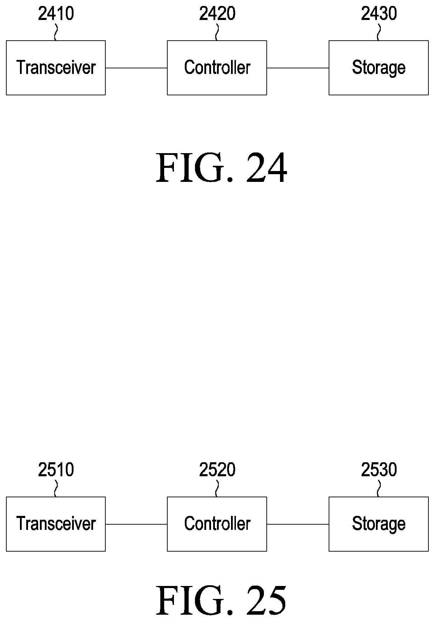

FIG. 24 illustrates a structure of an OOB anchor device according to an embodiment of the disclosure.

The OOB device or OOB anchor described with reference to FIGS. 1 to 22 may correspond to the OOB anchor device of FIG. 24.

Referring to FIG. 24, the OOB anchor device may include a transceiver 2410, a controller 2420, and a storage 2430. In the disclosure, the controller may be defined as a circuit or application specific integrated circuit or at least one processor.

The transceiver 2410 may transmit and receive signals to and from other entities. For example, the transceiver 2410 may transmit and receive data to and from other devices using OOB communication (e.g., BLE).

The controller 2420 may provide overall control to the operations of the electronic device according to an embodiment of the disclosure. For example, the controller 2420 may control a signal flow between blocks to perform the operations according to the flowcharts described above. Specifically, the controller 2420 may control, for example, the operations (e.g., BLE message transmission) of an OOB anchor, which have been described with reference to FIGS. 1 to 23.

The storage 2430 may store at least one of information transmitted and received through the transceiver 2410 or information generated through the controller 2420. For example, the storage 2430 may store information and data required for the methods described with reference to FIGS. 1 to 23. In an embodiment, the storage may include assistant data included in a BLE message, as described above.

FIG. 25 illustrates a structure of a UWB anchor device according to an embodiment of the disclosure.

The UWB device or UWB anchor described with reference to FIGS. 1 to 22 may correspond to the UWB anchor device of FIG. 25.

Referring to FIG. 24, the OOB anchor device may include a transceiver 2510, a controller 2520, and a storage 2530. In the disclosure, the controller may be defined as a circuit or application specific integrated circuit or at least one processor.

The transceiver 2510 may transmit and receive signals to and from other entities. For example, the transceiver 2510 may transmit and receive data to and from other devices using UWB communication.

The controller 2520 may provide overall control to the operations of the electronic device according to an embodiment of the disclosure. For example, the controller 2520 may control a signal flow between blocks to perform the operations according to the flowcharts described above. Specifically, the controller 2520 may control, for example, the operations (e.g., UWB message (RFRAME) transmission) of a UWB anchor, which have been described with reference to FIGS. 1 to 22.

The storage 2530 may store at least one of information transmitted and received through the transceiver 2510 or information generated through the controller 2520. For example, the storage 2530 may store information and data required for the methods described with reference to FIGS. 1 to 22. In an embodiment, the storage may include assistant data included in a BLE message, as described above.

In the specific embodiments of the disclosure described above, components included in the disclosure are expressed in a singular or plural form depending on the specific embodiments. However, the singular or plural representation is chosen for ease of description and as appropriate to the context presented. The disclosure is not limited to the singular or plural components, and components expressed as plural may be configured as singular or components expressed as singular may be configured as plural.

While specific embodiments have been described above in the disclosure, various modifications can be made without departing from the scope of the disclosure. Therefore, the scope of the disclosure should not be limited to the described embodiments, but should be defined by the scope of the appended claims.

**Claims**

1. A method of an electronic device (2110), the method comprising:

   receiving (2101), from an out-of-band, OOB, anchor device, an OOB message including an assistance data, the assistance data including ultra-wide band, UWB, configuration information;
   receiving (2103), from at least one UWB anchor device, at least one UWB message based on the UWB configuration information; and
   determining (2104) location information about the electronic device based on the at least one UWB message, wherein the UWB configuration information includes a value of a UWB role for the electronic device and a value of a ranging method, and
   wherein the value of the UWB electronic device role indicates acting as a UWB tag, and the value of the ranging method indicates a downlink time difference of arrival, DL-TDoA.

2. The method of claim 1, wherein the assistance data further includes location information about the at least one UWB anchor device, and
   wherein the location information about the electronic device is calculated using the location information about the at least one UWB anchor device and the received at least one UWB message.

3. The method of claim 1, wherein the at least one UWB message further includes location information about the at least one UWB anchor device.

4. The method of claim 1, wherein the OOB message corresponds to a Bluetooth low energy, BLE, advertisement message broadcast from the OOB anchor device, and
wherein the BLE advertisement message includes flag information indicating whether the assistance data is included in the BLE advertisement message

5. The method of claim 1, further comprising:

   registering a profile for an application associated with the determination of the location information; and
   generating a service instance identifier, ID, for identifying the registered profile.

6. The method of claim 5, wherein registering the profile comprises transmitting a request for registering the profile to a profile management entity by the application, and
wherein the request includes service configuration information including information for generating a static scrambled timestamp sequence, STS, OOB configuration information including BLE-related information and UWB configuration information for UWB ranging.

7. The method of claim 6, wherein the STS OOB configuration information includes OOB BLE role information indicating an OOB role corresponding to BLE, and the OOB BLE role information is set to a value indicating Scanner/No generic attribute profile, GATT.

8. The method of claim 6, further comprising:

   executing the application;
   activating the profile for the application based on the service instance ID; and
   applying a UWB configuration and an OOB configuration corresponding to the activated profile.

9. The method of claim 8, wherein the execution of the application is performed based on a signal received from the OOB anchor device, a signal received through an Internet, a location of the electronic device, or a user input.

10. An electronic device (2110) comprising:

    a transceiver (2310); and
    a controller (2320) connected to the transceiver,
    wherein the controller is configured to:

       receive, from an out-of-band, OOB anchor device, an OOB message including an assistance data, the assistance data including ultra-wide band, UWB, configuration information,
       receive, from at least one UWB anchor device, at least one UWB message based on the UWB configuration information, and
       determine location information about the electronic device based on the at least one UWB message,
       wherein the UWB configuration information includes a value of a UWB role for the electronic device and a value of a ranging method, and
       wherein the value of the UWB electronic device role indicates acting as a UWB tag and the value of the ranging method indicates a downlink time difference of arrival, DL-TDoA.

11. The electronic device of claim 10, wherein the assistance data further includes location information about the at least one UWB anchor device, and
wherein the location information about the electronic device is calculated using the location information about the at least one UWB anchor device and the received at least one UWB message.

12. The electronic device of claim 10, wherein the at least one UWB message further includes location information about the at least one UWB anchor device.

13. The electronic device of claim 10, wherein the OOB message corresponds to a Bluetooth low energy, BLE, advertisement message broadcast from the OOB anchor device, and
wherein the BLE advertisement message includes flag information indicating whether the assistance data is included in the BLE advertisement message.

14. The electronic device of claim 10, wherein the at least one processor is further configured to register a profile for an application associated with the determination of the location information, and
generate a service instance identifier, ID, for identifying the registered profile.

15. The electronic device of claim 14, wherein at least one processor is further configured to transmit a request for registering the profile to a profile management entity by the application, and
wherein the request includes service configuration information including information for generating a static scrambled timestamp sequence, STS, OOB configuration information including BLE-related information and UWB configuration information for UWB ranging.

**Patentansprüche**

1. Verfahren einer elektronischen Vorrichtung (2110), wobei das Verfahren Folgendes umfasst:

Empfangen (2101) einer OOB-Nachricht, die Unterstützungsdaten enthält, von einer Out-of-Band(OOB)-Ankervorrichtung, wobei die Unterstützungsdaten Ultrabreitband(UWB)-Konfigurationsinformationen enthalten;
Empfangen (2103) mindestens einer UWB-Nachricht basierend auf den UWB-Konfigurationsinformationen von mindestens einer UWB-Ankervorrichtung; und
Bestimmen (2104) von Standortinformationen über die elektronische Vorrichtung basierend auf der mindestens einen UWB-Nachricht,
wobei die UWB-Konfigurationsinformationen einen Wert einer UWB-Rolle für die elektronische Vorrichtung und einen Wert eines Ranging-Verfahrens enthalten, und
wobei der Wert der UWB-Rolle der elektronischen Vorrichtung die Funktion als UWB-Tag anzeigt und der Wert des Ranging-Verfahrens eine Downlink-Ankunftszeitdifferenz, DL-TDoA, anzeigt.

2. Verfahren nach Anspruch 1, wobei die Unterstützungsdaten ferner Standortinformationen über die mindestens eine UWB-Ankervorrichtung enthalten, und
wobei die Standortinformationen über die elektronische Vorrichtung unter Verwendung der Standortinformationen über die mindestens eine UWB-Ankervorrichtung und der empfangenen mindestens einen UWB-Nachricht berechnet werden.

3. Verfahren nach Anspruch 1, wobei die mindestens eine UWB-Nachricht ferner Standortinformationen über die mindestens eine UWB-Ankervorrichtung enthält.

4. Verfahren nach Anspruch 1, wobei die OOB-Nachricht einer Bluetooth Low Energy(BLE)-Ankündigungsnachricht entspricht, die von der OOB-Ankervorrichtung gesendet wird, und
wobei die BLE-Ankündigungsnachricht Flag-Informationen enthält, die anzeigen, ob die Unterstützungsdaten in der BLE-Ankündigungsnachricht enthalten sind.

5. Verfahren nach Anspruch 1, das ferner Folgendes umfasst:

Registrieren eines Profils für eine Anwendung, die mit der Bestimmung der Standortinformationen assoziiert ist; und
Erzeugen einer Dienstinstanz-Kennung, ID, zum Identifizieren des registrierten Profils.

6. Verfahren nach Anspruch 5, wobei das Registrieren des Profils das Übertragen einer Anforderung zum Registrieren des Profils durch die Anwendung an eine Profilverwaltungseinheit umfasst, und
wobei die Anforderung Dienstkonfigurationsinformationen enthält, die Informationen zum Erzeugen von STS(statische verschlüsselte Zeitstempelsequenz)-OOB-Konfigurationsinformationen enthalten, die BLE-bezogene Informationen und UWB-Konfigurationsinformationen für das UWB-Ranging enthalten.

7. Verfahren nach Anspruch 6, wobei die STS-OOB-Konfigurationsinformationen OOB-BLE-Rolleninformationen enthalten, die eine OOB-Rolle anzeigen, die BLE entspricht, und die OOB-BLE-Rolleninformationen auf einen Wert gesetzt sind, der Scanner/Kein generisches Attributprofil, GATT, anzeigt.

8. Verfahren nach Anspruch 6, das ferner Folgendes umfasst:

Ausführen der Anwendung;
Aktivieren des Profils für die Anwendung basierend auf der Dienstinstanz-ID; und
Anwenden einer UWB-Konfiguration und einer OOB-Konfiguration, die dem aktivierten Profil entsprechen.

9. Verfahren nach Anspruch 8, wobei die Ausführung der Anwendung basierend auf einem von der OOB-Ankervorrichtung empfangenen Signal, einem über Internet empfangenen Signal, einem Standort der elektronischen Vorrichtung oder einer Benutzereingabe ausgeführt wird.

10. Elektronische Vorrichtung (2110), die Folgendes umfasst:

einen Transceiver (2310); und
eine Steuerung (2320), die mit dem Transceiver verbunden ist,
wobei die Steuerung zu Folgendem konfiguriert ist:

Empfangen einer OOB-Nachricht, die Unterstützungsdaten enthält, von einer Out-of-Band(OOB)-Ankervorrichtung, wobei die Unterstützungsdaten Ultrabreitband(UWB)-Konfigurationsinformationen enthalten,
Empfangen mindestens einer UWB-Nachricht basierend auf den UWB-Konfigurationsinformationen von mindestens einer UWB-Ankervorrichtung, und
Bestimmen von Standortinformationen über die elektronische Vorrichtung basierend auf der mindestens einen UWB-Nachricht,
wobei die UWB-Konfigurationsinformationen einen Wert einer UWB-Rolle für die elektronische Vorrichtung und einen Wert eines Ranging-Verfahrens enthalten, und
wobei der Wert der UWB-Rolle der elektronischen Vorrichtung die Funktion als UWB-Tag anzeigt und der Wert des Ranging-Verfahrens eine Downlink-Ankunftszeitdifferenz, DL-TDoA, anzeigt.

11. Elektronische Vorrichtung nach Anspruch 10, wobei die Unterstützungsdaten ferner Standortinformationen über die mindestens eine UWB-Ankervorrichtung enthalten, und
wobei die Standortinformationen über die elektronische Vorrichtung unter Verwendung der Standortinformationen über die mindestens eine UWB-Ankervorrichtung und der empfangenen mindestens einen UWB-Nachricht berechnet werden.

12. Elektronische Vorrichtung nach Anspruch 10, wobei die mindestens eine UWB-Nachricht ferner Standortinformationen über die mindestens eine UWB-Ankervorrichtung enthält.

13. Elektronische Vorrichtung nach Anspruch 10, wobei die OOB-Nachricht einer Bluetooth Low Energy(BLE)-Ankündigungsnachricht entspricht, die von der OOB-Ankervorrichtung gesendet wird, und
wobei die BLE-Ankündigungsnachricht Flag-Informationen enthält, die anzeigen, ob die Unterstützungsdaten in der BLE-Ankündigungsnachricht enthalten sind.

14. Elektronische Vorrichtung nach Anspruch 10, wobei der mindestens eine Prozessor ferner so konfiguriert ist, dass er ein Profil für eine Anwendung registriert, die mit der Bestimmung der Standortinformationen assoziiert ist, und eine Dienstinstanz-Kennung, ID, zum Identifizieren des registrierten Profils erzeugt.

15. Elektronische Vorrichtung nach Anspruch 14, wobei mindestens ein Prozessor ferner so konfiguriert ist, dass er eine Anforderung zum Registrieren des Profils durch die Anwendung an eine Profilverwaltungseinheit überträgt, und wobei die Anforderung Dienstkonfigurationsinformationen enthält, die Informationen zum Erzeugen von STS(statische verschlüsselte Zeitstempelsequenz)-OOB-Konfigurationsinformationen enthalten, die BLE-bezogene Informationen und UWB-Konfigurationsinformationen für das UWB-Ranging enthalten.

## Revendications

1. Procédé d'un dispositif électronique (2110), le procédé comprenant :

recevoir (2101), à partir d'un dispositif d'ancrage hors bande, OOB, un message OOB incluant des données d'assistance, les données d'assistance incluant des informations de configuration à bande ultra large, UWB ;
recevoir (2103), à partir d'au moins un dispositif d'ancrage UWB, au moins un message UWB sur la base des informations de configuration UWB ; et

déterminer (2104) des informations de localisation concernant le dispositif électronique sur la base de l'au moins un message UWB,

> où les informations de configuration UWB incluent une valeur d'un rôle UWB pour le dispositif électronique et une valeur d'un procédé de télémétrie, et
> où la valeur du rôle du dispositif électronique UWB indique qu'il agit comme une étiquette UWB, et la valeur du procédé de télémétrie indique une différence de temps d'arrivée en liaison descendante, DL-TDoA.

2. Procédé selon la revendication 1, où les données d'assistance incluent en outre des informations de localisation concernant l'au moins un dispositif d'ancrage UWB, et
où les informations de localisation concernant le dispositif électronique sont calculées à l'aide des informations de localisation concernant l'au moins un dispositif d'ancrage UWB et l'au moins un message UWB reçu.

3. Procédé selon la revendication 1, où l'au moins un message UWB inclut en outre des informations de localisation concernant l'au moins un dispositif d'ancrage UWB.

4. Procédé selon la revendication 1, où le message OOB correspond à une diffusion de message d'annonce Bluetooth faible énergie, BLE, par le dispositif d'ancrage OOB, et
où le message d'annonce BLE inclut des informations d'indicateur indiquant si les données d'assistance sont incluses dans le message d'annonce BLE.

5. Procédé selon la revendication 1, comprenant en outre :

> enregistrer un profil pour une application associée à la détermination des informations de localisation ; et
> générer un identifiant, ID, d'instance de service pour identifier le profil enregistré.

6. Procédé selon la revendication 5, où l'enregistrement du profil comprend la transmission d'une demande d'enregistrement du profil à une entité de gestion de profil par l'application, et
où la demande inclut des informations de configuration de service incluant des informations pour générer des informations de configuration OOB de séquence d'estampille temporelle brouillée, STS, incluant des informations liées au BLE et des informations de configuration UWB pour la télémétrie UWB.

7. Procédé selon la revendication 6, où les informations de configuration OOB de STS incluent des informations de rôle OOB BLE indiquant un rôle OOB correspondant au BLE, et les informations de rôle OOB BLE sont définies sur une valeur indiquant Scanner/aucun profil d'attribut générique, GATT.

8. Procédé selon la revendication 6, comprenant en outre :

> exécuter l'application ;
> activer le profil pour l'application sur la base de l'ID d'instance de service ; et
> applique une configuration UWB et une configuration OOB correspondant au profil activé.

9. Procédé selon la revendication 8, où l'exécution de l'application est effectuée sur la base d'un signal reçu du dispositif d'ancrage OOB, d'un signal reçu par l'intermédiaire d'Internet, d'une localisation du dispositif électronique ou d'une entrée utilisateur.

10. Dispositif électronique (2110) comprenant :

> un émetteur-récepteur (2310) ; et
> un contrôleur (2320) connecté à l'émetteur-récepteur,
> où le contrôleur est configuré pour :

>> recevoir, à partir d'un dispositif d'ancrage hors bande, OOB, un message OOB incluant des données d'assistance, les données d'assistance incluant des informations de configuration à bande ultra large, UWB,
>> recevoir, à partir d'au moins un dispositif d'ancrage UWB, au moins un message UWB sur la base des informations de configuration UWB, et
>> déterminer des informations de localisation concernant le dispositif électronique sur la base de l'au moins un message UWB,

où les informations de configuration UWB incluent une valeur d'un rôle UWB pour le dispositif électronique et une valeur d'un procédé de télémétrie, et

où la valeur du rôle du dispositif électronique UWB indique qu'il agit comme une étiquette UWB, et la valeur du procédé de télémétrie indique une différence de temps d'arrivée en liaison descendante, DL-TDoA.

11. Dispositif électronique selon la revendication 10, où les données d'assistance incluent en outre des informations de localisation concernant l'au moins un dispositif d'ancrage UWB, et

où les informations de localisation concernant le dispositif électronique sont calculées à l'aide des informations de localisation concernant l'au moins un dispositif d'ancrage UWB et l'au moins un message UWB reçu.

12. Dispositif électronique selon la revendication 10, où l'au moins un message UWB inclut en outre des informations de localisation concernant l'au moins un dispositif d'ancrage UWB.

13. Dispositif électronique selon la revendication 10, où le message OOB correspond à une diffusion de message d'annonce Bluetooth faible énergie, BLE, par le dispositif d'ancrage OOB, et

où le message d'annonce BLE inclut des informations d'indicateur indiquant si les données d'assistance sont incluses dans le message d'annonce BLE.

14. Dispositif électronique selon la revendication 10, où l'au moins un processeur est en outre configuré pour enregistrer un profil pour une application associée à la détermination des informations de localisation, et

générer un identifiant, ID, d'instance de service pour identifier le profil enregistré.

15. Dispositif électronique selon la revendication 14, où l'au moins un processeur est en outre configuré pour transmettre une demande d'enregistrement du profil à une entité de gestion de profil par l'application, et

où la demande inclut des informations de configuration de service incluant des informations pour générer des informations de configuration OOB de séquence d'estampille temporelle brouillée, STS, incluant des informations liées au BLE et des informations de configuration UWB pour la télémétrie UWB.

100

110
UWB-enabled Application Layer

— — — Interface #1 — — —

120
UWB Framework

— — — Interface #2 — — —

130
UWB Subsystem (UWBS)

UWB MAC

UWB PHY

# FIG. 1A

FIG. 1B

FIG. 2

| MAC header (MHR) | MAC payload | MAC footer (MFR) |
|---|---|---|

| Synchronization header (SHR) | PHY header (PHR) | PHY payload (PSDU) |
|---|---|---|

(a)

| SP0 | SYNC | SFD | PHR | PHY payload | |
|---|---|---|---|---|---|

| SP1 | SYNC | SFD | STS | PHR | PHY payload |
|---|---|---|---|---|---|

| SP2 | SYNC | SFD | PHR | PHY payload | STS |
|---|---|---|---|---|---|

| SP3 | SYNC | SFD | STS | | |
|---|---|---|---|---|---|

Arrow shows RMARKER reference position, in each case

(b)

# FIG. 3

| First UWB device | | Second UWB device |
|---|---|---|

OOB step — 4010

UWB step — 4020

# FIG. 4

FIG. 5A

FIG. 5B

FIG. 5C

Ranging block

| Ranging round 0 | Ranging round 1 | Ranging round 2 | Ranging round 3 | . . . . . | Ranging round N-1 |
|---|---|---|---|---|---|

| Ranging slot 0 | Ranging slot 1 | Ranging slot 2 | . . . . . | Ranging slot M-1 |
|---|---|---|---|---|

FIG. 6

FIG. 7

**(a)**

| 1 | 2 | 3 | 4 | 5 |
|---|---|---|---|---|
| Installation step | Entry step | Assistant Data acquisition step | Localization step | Service use step |

**(b)**

| 1 | 2 | 3 | 4 | 5 |
|---|---|---|---|---|
| App installation | App execution | OOB information reception | UWB message reception/location calculation | IPS service use |

**(c)**

- Map upload
- App distribution

ADMIN

Map storage server

App server

0. Anchor/beacon installation

1. App download (including map data)

2. APP Triggering

Local server

BLE Beacon

3. Required information for overhearing UWB signal

App execution

UWB Anchor

4. Location calculation

5. User location information

FIG. 8

FIG. 9

EP 4 346 237 B1

1000

1) APP installation and map data transmission

IPS
service provider — 1030

— 1010

1011

FiRa enabled
App (for IPS)

2) IPS profile registration    3) Service instance ID

1012

| Generic Secure Service | FiRa service profile manager | FiRa OOB Connector(s) (ex, BLE, CP, WiFi) |
| --- | --- | --- |
| | PACS | IPS | xxx | |

OoB device
(e.g. BLE beacon,
3GPP LMF, WiFi AP) — 1020

UWB Service
Localization

FiRa framework

Secure Component

— 1014

Prop. applet    FiRa applt

UWB subsystem — 1013

Secure UWB service (SUS)

FIG. 10

User Device

• Object service configuration

| Parameter | Type | Description |
|---|---|---|
|  |  |  |
| Service ID | Integer | Identifier for the FiRa Profile that the FiRa-enabled Application supports.<br>For FiRa Profiles, the ServiceID defined in the corresponding FiRa Profile specification. |
| Service deployment option | Integer | Indicates the chosen deployment option<br>1= service deployment scenario 1<br>2= service deployment scenario 2<br>3= service deployment scenario 3<br>4= service deployment scenario 4<br>(Static STS, FiRa applet 사용 x) |
| Fixed STS | Integer | Fixed Values for STS<br>Instead of the traditional static STS changing with the ranging slot, a fixed STS value should be used because overhearing rather than session establishment is intended and thus a UWB message needs to be overheard regardless of entry time |

# FIG. 11A

• Object OOB Configuration

| Parameter | Type | Description |
|-----------|------|-------------|
| OOBType | Integer | This indicates the type of OOB connection used for FiRa Service establishment<br>0: None<br>1: Bluetooth LE<br>Other values: RFU |
| OOBBLERole | Integer | This indicates the role of FiRa Device for OOB<br>0: Scanner/Central & GATT Client (CP)<br>1: Advertiser/Peripheral & GATT Server (FCS)<br>2: Scanner/ No GATT |

# FIG. 11B

EP 4 346 237 B1

· Object UWB Configuration

| Parameter | Type | Description |
|---|---|---|
| UWBRole | Integer | Used to indicate selected UWB roles:<br>0: Controlee & Responder<br>1: Controlee & Initiator<br>2: Controller & Responder<br>3: Controller & Initiator<br>4; DT - Tag |
| Rangingmethod | Integer | 0: One way ranging (OWR).<br>1: Single-sided two-way ranging (SS-TWR).<br>2: Double-sided two-way ranging (DS-TWR).<br>3: DL-TDOA |
| UWBanchorInfo | Integer | AnchorID(MAC address)<br>{Latitude, Longitude, floor, cluster #}<br>Floor 와 Cluster # 는 optional |
| RFRAME configuration | Integer | 0: SP0<br>1: SP1<br>2: RFU<br>3: SP3 |
| Channel Number | Integer | Unsigned integer that specifies channel number for HRP UWB PHY to be used. |
| Preamble CI | Integer | Unsigned integer that specifies code index according to Table 16-7 in IEEE Std 802.15.4-2019 and Table 42 in IEEE Std 802.15.4-2019 |
| ToFReport | Boolean | 0: No ToF Report<br>1: ToF Report |
| AoAAzimuthReport | Boolean | 0: No AoA Azimuth Report<br>1: AoA Azimuth Report |
| AoAElevationReport | Boolean | 0: No AoA Elevation Report<br>1: AoA Elevation Report |
| AoAFOMReport | Boolean | 0: No AoA FOM Report<br>1: AoA FOM Report |

# FIG. 11C

· Object status

| Parameter | Type | Description |
|---|---|---|
| Service instance ID | Integer | Unique 128bit ID assigned by the FiRa Profile Manager. |
| Status code | Integer | Refer to 12.3.9 |

# FIG. 11D

EP 4 346 237 B1

FIG. 12

EP 4 346 237 B1

| Parameter | Type | Description |
|---|---|---|
| Service instance ID | Integer | Unique serviceInstanceID assigned by FiRa Profile Manager during initiation. |

(a)

| Parameter | Type | Description |
|---|---|---|
| Status | String | Status to indicate success or failure |

(b)

# FIG. 13

FIG. 14

EP 4 346 237 B1

| Field name | Size (bits) | Coding explanation |
|---|---|---|
| Length | 8 | Number of octets inside AD Type element<br>(all subsequent data within this table). Value is variable (3-256). |
| Data type | 8 | Value set to FFh as per BT SIG specification assigned numbers. |
| Company identifier | 16 | FiRa Consortium identifier assigned by BT SIG<br>(little endian encoding – e.g. value 7500h means decimal value 117). |
| UWB indication data | 24 | String is encoded as follows (from the most significant bit):<br>4 bits – Type of FiRa specific field = 1h (0001b).<br>4 bits – Length of FiRa specific field = variable (2-15 aka 0010b-1111b). Counting all the octets of subsequent data within UWB indication data field.<br>8 bits – Capabilities field encoded as follows:<br>    Bit 7 (most significant, mask 80h) – UWB technology support as per FiRa specifications<br>    (1b if device supports UWB, 0b otherwise).<br>    Bit 6 (mask 40h) – ISO14443 technology support<br>    (1b if device supports any of ISO14443 RFID technologies in reader mode, 0b otherwise).<br>    Bit 5 (mask 20h) – Presence of UWB regulatory information in advertisement<br>    (1b if present, 0b otherwise).<br>    Bit 4 (mask 10h) – UWB regulatory information availability as a OOB UWB message<br>    (1b if available, 0b otherwise).<br>    Bits 3-2 (mask 0Eh) are reserved for future use and currently set to value 000b. ⟋1510<br>    Bits 1 (mask xxx) – UWB configuration data in advertisement (1b if present, 0b otherwise).<br>    Bit 0 (mask 01h) – Indicates if Advertiser/Peripheral also operates as BLE GAP Scanner/Central<br>    (in dual mode). Value 1b indicates support of dual role, value 0b<br>    indicates support of Advertising/Peripheral role only.<br>8 bits – BLE RSSI threshold indication for BLE GAP Central signaling if/when it should initiate BLE connection. Value is interpreted as signed integer in dBm units<br>Subsequent data – reserved (void). |

FIG. 15A

EP 4 346 237 B1

| UWB Configuration data | variable | String is encoded as follows (from the most significant bit):<br>4 bits – Type of FiRa specific field = 5h (0010b).<br>4 bits – Length of FiRa specific field = variable (2-15 aka 0010b-1111b).<br>Counting all the octets of subsequent data within Vendor specific data field.<br>16 bits – Vendor ID as assigned by BT SIG<br>(little endian encoding – e.g. value 7500h means decimal value 117).<br>8 bit – UWBRole<br>    Bit 5~7 – reserved for future use<br>    Bit 4- DT-Tag<br>    Bit 3 – Controller & Initiator<br>    Bit 2 – Controller & Responder<br>    Bit 1 – Controlee & Initiator<br>    Bit 0 – Controlee & Responder<br>4 bits – Ranging Method :<br>    Bit 4- UL TDOA<br>    Bit 3 – DL TDOA<br>    Bit 2 – DS TWR<br>    Bit 1 – SS TWR<br>    Bit 0 – OWR<br>4 bits – UWBanchorInfo<br>4 bit – RFRAMEConfiguration<br>    Bit 3 – SP3<br>    Bit 2 – RFU<br>    Bit 1 – SP1<br>    Bit 0 – SP0<br>4 bit – ChannelNumber<br>4 bit – PreambleCI<br>4 bit – App identifier<br>4 bit – App specific Data |

# FIG. 15B

| Parameter | Type | Description |
|---|---|---|
| UWBRole | Mandatory | Used to indicate selected UWB roles:<br>0: Controlee & Responder<br>1: Controlee & Initiator<br>2: Controller & Responder<br>3: Controller & Initiator<br>4; DT - Tag |
| Rangingmethod | Mandatory | 0: One way ranging (OWR).<br>1: Single-sided two-way ranging (SS-TWR).<br>2: Double-sided two-way ranging (DS-TWR).<br>3: DL-TDOA<br>4. UL-TDOA |
| UWBanchorInfo | Mandatory | AnchorID(MAC address)<br>{Latitude, Longitude, floor, cluster #}<br>Floor and Cluster # are optional |
| RFRAME configuration | Mandatory | 0: SP0<br>1: SP1<br>2: RFU<br>3: SP3 |
| Channel Number | Mandatory | Unsigned integer that specifies channel number for HRP UWB PHY to be used. |
| Preamble CI | Mandatory | Unsigned integer that specifies code index according to Table 16-7 in IEEE Std 802.15.4-2019 and Table 42 in IEEE Std 802.15.4-2019 |
| APP ID | optional | The following app specific data should be transmitted from the other device to app having corresponding ID |
| APP specific data | optional | Data to be transmitted to app identifiable by the ID<br>e.g.) location ID of actual venue distinguished within app |

## FIG. 15C

FIG. 16

FIG. 17

EP 4 346 237 B1

```
                              ╱1810
                    ◇ UWB configuration? ◇
```

**<First configuration>** ╱1820-1

| If UWBRole==DT-Tag && Ranging Method==DL-TDOA |

**<Second configuration>** ╱1820-2

| If UWBRole==DT-Tag && Ranging Method== one way ranging or SS-TWR or DS-TWR && ToFReport Boolean == 1 |

**<Third configuration>** ╱1820-3

| If UWBRole==DT-Tag && Ranging Method== one way ranging or SS-TWR or DS-TWR && AoAAzimuthReport ==1 && AoAElevationReport==1 && AoAFOMReport==1 |

╱1830-1

| Calculate location of UE using time information (reception timestamp of each DTM, transmission timestamp of DTMs contained in corresponding DTMs, replay time contained in DTM) |

╱1830-2

| Calculate location of UE using time of flight information about ranging messages |

╱1830-3

| Calculate location of UE using AoA information about ranging messages |

# FIG. 18

FIG. 19

**1900**

IPS service provider — 1930

— 1910

FiRa enabled App (for IPS) — 1911

Map

Transmit location value (latitude, longitude, floor number)

1912

Generic Secure Service

FiRa profile

Localization algorithm

FiRa OOB Connectors (ex, BLE, CP, WiFi)

OoB (e.g. BLE beacon, 3GPP LMF, WiFi AP) — 1920

UWB Service

FiRa framework

Secure Component

Prop. applet

FiRa applet

1914

Secure UWB service (SUS)

UWB subsystem — 1913

User device

EP 4 346 237 B1

| Parameter | Type | Description | Description |
|---|---|---|---|
| Service instance ID | Integer | Unique 128bit value assigned by the FiRa Profile Manager | Instance ID generated when the profile is registered |
| Event group | Integer | Event Group of the event (see section 12.3.6) | |
| Event ID | Integer | Event ID of the event (see section 12.3.6) | |
| callbackData | Object | Callback Data. This is dependent on the event. May be NULL if no Callback data is defined for the particular event. | Location information about UE after localization algorithm is executed e.g.) (longitude, latitude, floor number) |

FIG. 20

EP 4 346 237 B1

FIG. 21

**2130** IPS service provider

**2120** BLE beacon/ 3GPP LPP

**2110** IPS App | UWB framework | UWB subsystem

**2240** UWB anchors

Recognize proximity to IPS — 2100

Assistance Data Acquisition — 2101

Internal UE operation
· When Ranging Method value in OOB information is DL-TDOA, value of UWB anchor info field (location values of anchors) is stored in framework
· When Device Role in OOB information is DT-Tag, UWB message is overheard and command for transmitting required time information to framework end is transmitted to UWB chipset.
· UWB message is overheard using UWB configuration information such as channel number, preamble CI, and so on in OOB information

UWB Startup — 2102

Repeated until IPS ends

2103 — UWB measurement

Localization — 2104

IPS — 2105

EP 4 346 237 B1

Start

Receive OOB message including required information
for determining location information about
electronic device from OOB anchor device — 2210

Receive at least one UWB message from at least one
UWB anchor device, based on required information — 2220

Determine location information about
electronic device based on UWB message — 2230

End

# FIG. 22

```
   2310              2320              2330

┌─────────────┐  ┌─────────────┐  ┌─────────────┐
│ Transceiver │──│ Controller  │──│   Storage   │
└─────────────┘  └─────────────┘  └─────────────┘
```

# FIG. 23

2410          2420          2430

| Transceiver | Controller | Storage |

# FIG. 24

2510          2520          2530

| Transceiver | Controller | Storage |

# FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021023377 A1